# EUROPEAN PATENT APPLICATION

(11) **EP 4 729 770 A1**
(43) Date of publication of application: **22.04.2026**
(21) Application number: 24858035.9
(22) Date of filing: 03.07.2024
(51) Int. Cl.: F03G 7/06

(54) **CONTROL METHOD, DEVICE, AND READABLE STORAGE MEDIUM**

(30) Priority: 29.08.2023 CN 202311103420; 08.09.2023 CN 202311163497
(71) Applicant: Huawei Technologies Co., Ltd., Shenzhen, Guangdong 518129 (CN)
(72) Inventor: HU, Huaqing, Shenzhen, Guangdong 518129 (CN); SUN, Hanxiang, Shenzhen, Guangdong 518129 (CN)
(74) Representative: Gill Jennings & Every LLP
(86) International application number: PCT/CN2024/103383
(87) International publication number: WO 2025/044491

(57) **Abstract**

This application relates to the field of drive technologies, and discloses a control method, a device, and a readable storage medium. In the method, when detecting that at least one actuator line in an SMA actuator is disconnected, an electronic device may control, through at least a part (referred to as a target actuator line below) of non-disconnected actuator lines, a carrier of the SMA actuator to move relative to a fastening part, where a direction of a resultant force of the target actuator line acting on the carrier is the same as a direction in which the carrier is driven to move. In this way, even if an actuator line in the SMA actuator in the electronic device is disconnected, the electronic device may drive, through non-disconnected actuator lines, the carrier to move.

## Description

This application claims priority to Chinese Patent Application No. 202311103420.8, filed with the China National Intellectual Property Administration on August 29, 2023 and entitled "CONTROL METHOD, DEVICE, AND READABLE STORAGE MEDIUM", which is incorporated herein by reference in its entirety.

This application claims priority to Chinese Patent Application No. 202311163497.4, filed with the China National Intellectual Property Administration on September 8, 2023 and entitled "CONTROL METHOD, DEVICE, AND READABLE STORAGE MEDIUM", which is incorporated herein by reference in its entirety.

### TECHNICAL FIELD

This application relates to the field of drive technologies, and in particular, to a control method, a device, and a readable storage medium.

### BACKGROUND

A shape memory alloy (shape memory alloy, SMA) actuator is an actuator that uses shape memory alloy as a driving material. In the SMA actuator, a fastening part and a carrier of the SMA actuator are connected through a plurality of actuator lines made of multi-shape memory alloy. An electronic device may control, by controlling contraction of each actuator line, the carrier to move relative to the fastening part. For example, in a camera module of the electronic device, a lens in a camera is usually disposed on the carrier of the SMA actuator. The electronic device may control, by controlling contraction of the actuator lines in the SMA actuator, the lens to move along an optical axis of the lens, to implement focusing of the camera, or control the lens to move in a plane perpendicular to the optical axis of the lens, to implement an image stabilization function of the camera.

Generally, movement of the carrier in the SMA actuator relative to the fastening part in one direction is implemented by contraction of the plurality of actuator lines connected in a head-to-tail manner. If one or more of the plurality of actuator lines are disconnected (for example, broken, or cannot normally contract), the SMA actuator cannot control the carrier to move in the direction.

### SUMMARY

In view of this, this application provides a control method, a device, and a readable storage medium.

According to a first aspect, an embodiment of this application provides a control method, applied to an electronic device. The electronic device includes a shape memory alloy actuator, a fastening part of the shape memory alloy actuator is connected to a carrier through N actuator lines, one end of the actuator line is connected to the carrier, the other end is connected to the fastening part, and when the actuator line contracts, the actuator line drives the carrier to move relative to the fastening part. The method includes: detecting a first operation of a user, where the first operation is used to indicate the carrier to move in a first direction; and when L actuator lines in the N actuator lines are disconnected, and a direction of a resultant force, acting on the carrier, of K actuator lines upon contraction in N-L non-disconnected actuator lines is the same as the first direction, driving, by using the K actuator lines, the carrier to move in the first direction.

In other words, when the electronic device needs to control the carrier to move in the first direction, if the L actuator lines in the N actuator lines are disconnected, and the direction of the resultant force, acting on the carrier, of the K actuator lines upon contraction in the N-L non-disconnected actuator lines is the same as the first direction, the electronic device may still drive, by using the K actuator lines, the carrier to move in the first direction.

In a possible implementation of the first aspect, the shape memory alloy actuator is disposed in a camera of the electronic device, and a lens of the camera is disposed on the carrier.

In this way, because movement of the carrier can drive the lens to move, even if an actuator line in the shape memory alloy actuator is disconnected, the electronic device can still control the lens to move in the first direction, so that the electronic device can retain at least some of a focusing function and an image stabilization function.

In a possible implementation of the first aspect, the N actuator lines include P actuator lines whose directions of components, in a first reference direction, of forces acting on the carrier upon contraction are a positive direction of the first reference direction, and N-P actuator lines whose directions of components, in the first reference direction, of forces acting on the carrier upon contraction are an opposite direction of the first reference direction, where the first reference direction is the same as a direction of an optical axis of the lens; and driving, by using the K actuator lines, the carrier to move in the first direction includes: when the following condition is met, selecting the K actuator lines from the N-L non-disconnected actuator lines, and driving, by using the K actuator lines, the carrier to move in the first direction: At least two actuator lines in the P actuator lines are not disconnected, and a direction of a resultant force, acting on the carrier, of the non-disconnected actuator lines upon contraction in the P actuator lines is the negative direction of the first reference direction; and at least two actuator lines in the N-P actuator lines are not disconnected, and a direction of a resultant force, acting on the carrier, of the non-disconnected actuator lines upon contraction in the N-P actuator lines is the positive direction of the first reference direction.

For example, the P actuator lines may be actuator lines in a positive pulling force actuator line group below, and the N-P actuator lines may be actuator lines in a negative pulling force actuator line group below.

In other words, in some implementations, the electronic device may drive, by using the K actuator lines, the carrier to move in the first direction only when the following line disconnection control condition is met.

In a possible implementation of the first aspect, the shape memory alloy actuator includes a first reference surface, a second reference surface, a third reference surface, and a fourth reference surface that are parallel to the first reference direction. The first reference surface and the third reference surface are symmetrically disposed with respect to a center of the carrier and are parallel to a second reference direction, the second reference surface and the fourth reference surface are symmetrically disposed with respect to the center of the carrier and are parallel to a third reference direction, and the first reference direction, the second reference direction, and the third reference direction are perpendicular to each other. The P actuator lines include a first actuator line, a third actuator line, a fifth actuator line, and a seventh actuator line that are respectively disposed on the first reference surface, the second reference surface, the third reference surface, and the fourth reference surface. The N-P actuator lines include a second actuator line, a fourth actuator line, a sixth actuator line, and an eighth actuator line that are respectively disposed on the first reference surface, the second reference surface, the third reference surface, and the fourth reference surface. A force of the first actuator line acting on the carrier upon contraction includes a component in the negative direction of the first reference direction and a component in a negative direction of the second reference direction. A force of the second actuator line acting on the carrier upon contraction includes a component in the positive direction of the first reference direction and a component in the negative direction of the second reference direction. A force of the third actuator line acting on the carrier upon contraction includes a component in the negative direction of the first reference direction and a component in a positive direction of the third reference direction. A force of the fourth actuator line acting on the carrier upon contraction includes a component in the positive direction of the first reference direction and a component in the positive direction of the third reference direction. A force of the fifth actuator line acting on the carrier upon contraction includes a component in the negative direction of the first reference direction and a component in a positive direction of the second reference direction. A force of the sixth actuator line acting on the carrier upon contraction includes a component in the positive direction of the first reference direction and a component in the positive direction of the second reference direction. A force of the seventh actuator line acting on the carrier upon contraction includes a component in the negative direction of the first reference direction and a component in a negative direction of the third reference direction. A force of the eighth actuator line acting on the carrier upon contraction includes a component in the positive direction of the first reference direction and a component in the negative direction of the third reference direction.

In other words, when two to four of the eight actuator lines of the shape memory alloy are disconnected, the electronic device may select at least a part of actuator lines from remaining non-disconnected actuator lines, to control the carrier to move in the first direction.

For example, the first reference direction, the second reference direction, and the third reference direction may be respectively a Z direction, a Y direction, and an X direction in the following; the first reference surface, the second reference surface, the third reference surface, and the fourth reference surface may be respectively a left side surface, a front side surface, a right side surface, and a rear side surface in the following; and the first actuator line to the eighth actuator line may be respectively an actuator line L1 to an actuator line L8 in the following.

In a possible implementation of the first aspect, selecting the K actuator lines from the N-L non-disconnected actuator lines includes: when at least one of the first actuator line and the fifth actuator line is disconnected, and at least one of the second actuator line and the sixth actuator line is disconnected, determining at least a part of the third actuator line, the fourth actuator line, the seventh actuator line, and the eighth actuator line as the K actuator lines; when at least one of the first actuator line and the fifth actuator line is disconnected, and at least one of the fourth actuator line and the eighth actuator line is disconnected, determining at least a part of the second actuator line, the third actuator line, the sixth actuator line, and the seventh actuator line as the K actuator lines; when at least one of the third actuator line and the seventh actuator line is disconnected, and at least one of the second actuator line and the sixth actuator line is disconnected, determining at least a part of the first actuator line, the fourth actuator line, the fifth actuator line, and the eighth actuator line as the K actuator lines; or when at least one of the third actuator line and the seventh actuator line is disconnected, and at least one of the fourth actuator line and the eighth actuator line is disconnected, determining at least a part of the first actuator line, the second actuator line, the fifth actuator line, and the sixth actuator line as the K actuator lines.

In a possible implementation of the first aspect, when at least one of the first actuator line and the fifth actuator line is disconnected, and at least one of the second actuator line and the sixth actuator line is disconnected, determining at least a part of the third actuator line, the fourth actuator line, the seventh actuator line, and the eighth actuator line as the K actuator lines includes: determining the fourth actuator line and the eighth actuator line as the K actuator lines corresponding to a case in which the first direction is the positive direction of the first reference direction; determining the third actuator line and the seventh actuator line as the K actuator lines corresponding to a case in which the first direction is the negative direction of the first reference direction; determining the third actuator line and the fourth actuator line as the K actuator lines corresponding to a case in which the first direction is the positive direction of the third reference direction; determining the seventh actuator line and the eighth actuator line as the K actuator lines corresponding to a case in which the first direction is the negative direction of the third reference direction; determining the third actuator line, the sixth actuator line, and the seventh actuator line as the K actuator lines corresponding to a case in which the first direction is the positive direction of the second reference direction and the sixth actuator line is not disconnected; or determining the second actuator line, the third actuator line, and the seventh actuator line as the K actuator lines corresponding to a case in which the first direction is the negative direction of the second reference direction and the second actuator line is not disconnected.

In a possible implementation of the first aspect, when at least one of the first actuator line and the fifth actuator line is disconnected, and at least one of the fourth actuator line and the eighth actuator line is disconnected, determining at least a part of the second actuator line, the third actuator line, the sixth actuator line, and the seventh actuator line as the K actuator lines includes: determining the second actuator line and the sixth actuator line as the K actuator lines corresponding to a case in which the first direction is the positive direction of the first reference direction; determining the third actuator line and the seventh actuator line as the K actuator lines corresponding to a case in which the first direction is the negative direction of the first reference direction; determining the second actuator line, the third actuator line, and the sixth actuator line as the K actuator lines corresponding to a case in which the first direction is the positive direction of the third reference direction; determining the second actuator line, the sixth actuator line, and the seventh actuator line as the K actuator lines corresponding to a case in which the first direction is the negative direction of the third reference direction; determining the third actuator line, the sixth actuator line, and the seventh actuator line as the K actuator lines corresponding to a case in which the first direction is the positive direction of the second reference direction; or determining the second actuator line, the third actuator line, and the seventh actuator line as the K actuator lines corresponding to a case in which the first direction is the negative direction of the second reference direction.

In a possible implementation of the first aspect, the first operation includes any one of the following operations: an operation of starting the electronic device by the user; an operation of adjusting a focal length of the camera by the user; an operation of moving the electronic device by the user; and an operation of starting the camera by the user.

In a possible implementation of the first aspect, detecting the first operation of the user includes: when the first operation is the operation of starting the electronic device by the user, determining the first direction based on a current position of the carrier and a preset position of the carrier; when the first operation is the operation of adjusting the focal length of the camera by the user, determining the first direction based on a current focal length of the camera and a focal length set by the user; when the first operation is the operation of moving the electronic device by the user, determining the first direction based on a second direction in which the user moves the electronic device; and when the first operation is the operation of starting the camera by the user, determining the first direction based on a focal length used by the camera to capture an image.

In a possible implementation of the first aspect, K is less than or equal to 4.

In other words, the electronic device may control, based on a maximum of four actuator lines, the carrier to move in the first direction.

In a possible implementation of the first aspect, the method further includes: when none of the N actuator lines is disconnected, driving, by using M actuator lines in the N actuator lines, the carrier to move in the first direction, where the M actuator lines include at least one of the L actuator lines.

According to a second aspect, an embodiment of this application provides a readable storage medium. The readable storage medium includes instructions. When the instructions are executed by an electronic device, the electronic device is enabled to implement the control method according to any one of the first aspect and the possible implementations of the first aspect.

According to a third aspect, an embodiment of this application provides an electronic device. The electronic device includes: a shape memory alloy actuator; a memory, configured to store instructions; and a processor, configured to execute the instructions, to enable the electronic device to control the shape memory alloy actuator by using the control method according to any one of the first aspect and the possible implementations of the first aspect.

According to a fourth aspect, an embodiment of this application provides a program product. When the program product runs on an electronic device, the electronic device is enabled to implement the control method according to any one of the first aspect and the possible implementations of the first aspect.

It should be understood that, for technical effect of the second aspect to the fourth aspect, refer to descriptions of the first direction. Details are not described herein again.

### BRIEF DESCRIPTION OF DRAWINGS

FIG. 1A is a diagram of a camera module in a mobile phone 1 according to some embodiments of this application;
FIG. 1B is a sectional view of an area in which a camera 5 is located in an A-A direction according to some embodiments of this application;
FIG. 2 is a diagram of a connection relationship among a fastening part 51, a carrier 53, and an actuator line group 54 according to some embodiments of this application;
FIG. 3 is a diagram of controlling a carrier 53 to move in a positive direction of a Z-axis according to some embodiments of this application;
FIG. 4 is a diagram of a case in which an SMA actuator line is disconnected according to some embodiments of this application;
FIG. 5A is a diagram of a case in which a carrier 53 is controlled to move in a positive direction of a Z-axis when an actuator line L8 and/or an actuator line L4 are/is disconnected according to some embodiments of this application;
FIG. 5B is a diagram of a case in which a carrier 53 is controlled to move in a negative direction of a Z-axis when an actuator line L8 and/or an actuator line L4 are/is disconnected according to some embodiments of this application;
FIG. 6 is a diagram of a case in which a carrier 53 is controlled to move in a negative direction of a Y-axis when an actuator line L8 and/or an actuator line L4 are/is disconnected according to some embodiments of this application;
FIG. 7 is a diagram of a case in which a carrier 53 is controlled to move in a positive direction of a Y-axis when an actuator line L8 and/or an actuator line L4 are/is disconnected according to some embodiments of this application;
FIG. 8A is a diagram of a case in which a carrier 53 is controlled to move in a positive direction of an X-axis when an actuator line L8 and/or an actuator line L4 are/is disconnected according to some embodiments of this application;
FIG. 8B is a diagram of a case in which a carrier 53 is controlled to move in a negative direction of an X-axis when an actuator line L8 and/or an actuator line L4 are/is disconnected according to some embodiments of this application;
FIG. 9A is a diagram of a case in which a carrier 53 is controlled to move in a positive direction of a Z-axis when at least one of an actuator line L8 and an actuator line L4 is disconnected and at least one of an actuator line L7 and an actuator line L3 is disconnected according to some embodiments of this application;
FIG. 9B is a diagram of a case in which a carrier 53 is controlled to move in a negative direction of a Z-axis when at least one of an actuator line L8 and an actuator line L4 is disconnected and at least one of an actuator line L7 and an actuator line L3 is disconnected according to some embodiments of this application;
FIG. 10A is diagram of a case in which a carrier 53 is controlled to move in a positive direction of a Z-axis when at least one of an actuator line L8 and an actuator line L4 is disconnected and at least one of an actuator line L5 and an actuator line L 1 is disconnected according to some embodiments of this application;
FIG. 10B is diagram of a case in which a carrier 53 is controlled to move in a negative direction of a Z-axis when at least one of an actuator line L8 and an actuator line L4 is disconnected and at least one of an actuator line L5 and an actuator line L1 is disconnected according to some embodiments of this application;
FIG. 10C is a diagram of a case in which a carrier 53 is controlled to move in a positive direction of a Y-axis when at least one of an actuator line L8 and an actuator line L4 is disconnected and at least one of an actuator line L5 and an actuator line L1 is disconnected according to some embodiments of this application;
FIG. 10D is diagram of a case in which a carrier 53 is controlled to move in a negative direction of a Y-axis when at least one of an actuator line L8 and an actuator line L4 is disconnected and at least one of an actuator line L5 and an actuator line L1 is disconnected according to some embodiments of this application;
FIG. 11 is a schematic flowchart of a control method according to some embodiments of this application; and
FIG. 12 is a diagram of a structure of a mobile phone 1 according to some embodiments of this application.

### DESCRIPTION OF EMBODIMENTS

Illustrative embodiments of this application include but are not limited to a control method, a device, and a readable storage medium.

It should be understood that the control method provided in embodiments of this application is applicable to any scenario in which an SMA actuator is controlled. For ease of description, the following describes the technical solutions of this application by using an SMA actuator in a camera as an example.

It should be understood that the control method provided in embodiments of this application is applicable to any electronic device mounted with an SMA actuator or any electronic device that can control the SMA actuator, including but not limited to a mobile phone, a tablet computer, a wearable device (for example, a smartwatch or a smart band), a smart home device (for example, a smart television or a smart speaker), an internet of things device, a pan-tilt-zoom, a camera device, a camera, or the like. This is not limited herein. For ease of description, in the following embodiments, an example in which the device is a mobile phone is used to describe the technical solutions of this application.

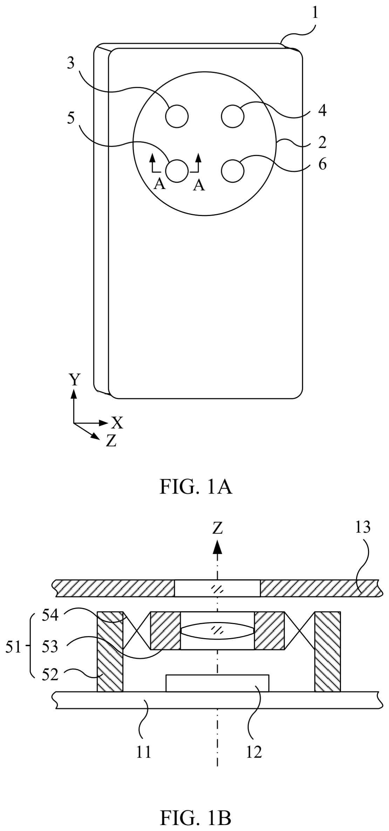

FIG. 1A is a diagram of a camera module in a mobile phone 1 according to some embodiments of this application;
As shown in FIG. 1, the mobile phone 1 includes a camera module 2, and the camera module 2 includes four cameras (for example, a camera 3, a camera 4, a camera 5, and a camera 6).

It should be understood that an SMA actuator is configured in one or more of the camera 3, the camera 4, the camera 5, and the camera 6. The following uses the camera 5 configured with the SMA actuator as an example for description.

FIG. 1B is a sectional view of an area in which the camera 5 is located in an A-A direction according to some embodiments of this application.

As shown in FIG. 1B, the camera 5 includes an image sensor 12 and an SMA actuator 51. The SMA actuator 51 includes a fastening part 52 and a carrier 53 on which a lens is mounted. The fastening part 52 and the carrier 53 are connected through an actuator line group 54.

The image sensor 12, the carrier 53, and a housing 13 of the mobile phone 1 are sequentially disposed at intervals along an optical axis (a Z direction shown in FIG. 1B) of the camera 5.

The fastening part 52 and the image sensor 12 are fastened to a circuit board 11. In other words, the fastening part 52 and the image sensor 12 remain relatively fastened.

The carrier 53 may move in a direction of the optical axis of the camera 5, or may move in a plane perpendicular to the optical axis (for example, an X-Y plane shown in FIG. 1B), or may move in another direction through motion synthesis.

The mobile phone 1 may control the carrier 53 to move in the direction of the optical axis of the camera 5 by controlling contraction of actuator lines in the actuator line group 54, to control the lens disposed on the carrier 53 to move in the direction of the optical axis of the camera 5, to implement a focusing function of the camera 5. The mobile phone 1 may also control, by controlling contraction of the actuator lines in the actuator line group 54, the carrier 53 to move in the plane perpendicular to the optical axis of the camera 5, to implement an image stabilization function of the camera 5.

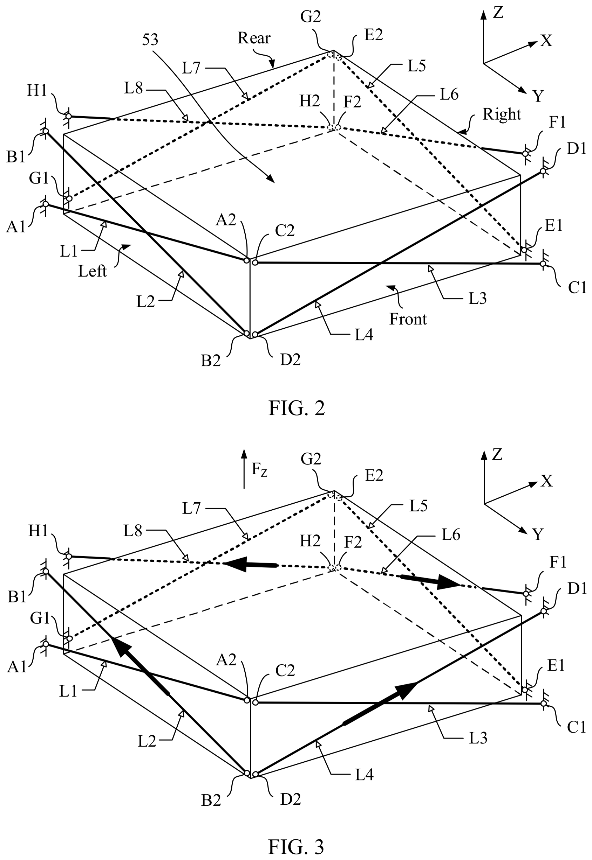

Further, FIG. 2 is a diagram of a connection relationship among the fastening part 51, the carrier 53, and the actuator line group 54 according to some embodiments of this application.

As shown in FIG. 2, the actuator line group 54 includes eight mutually independent actuator lines, that is, an actuator line L1, an actuator line L2, an actuator line L3, an actuator line L4, an actuator line L5, an actuator line L6, an actuator line L7, and an actuator line L8. One end of each actuator line in the actuator line group 54 is connected to the fastening part 51, and the other end is connected to the carrier 53. Each actuator line in the actuator line group 54 may contract when a temperature exceeds a temperature threshold (for example, when the temperature of the actuator line exceeds the temperature threshold due to a voltage or current applied to two ends of the actuator line), to pull the carrier 53 to move.

For example, in some embodiments, the carrier 53 may be approximately considered as a cuboid. For ease of description, a coordinate system X-Y-Z shown in FIG. 2 is established. A Z direction is the direction of the optical axis of the camera 5, and an X-Y plane on which an X-axis and a Y-axis are located is perpendicular to a Z-axis. In addition, in the following, two side surfaces that are of the carrier 53 and that are perpendicular to an X-axis direction are respectively referred to as a left side surface and a right side surface, two side surfaces that are of the carrier 53 and that are perpendicular to a Y-axis direction are respectively referred to as a front side surface and a rear side surface, and two side surfaces that are of the carrier 53 and that are perpendicular to the Z-axis are respectively referred to as a top surface and a bottom surface.

In some embodiments, two actuator lines may be disposed on each of the four side surfaces of the carrier 53, and the two actuator lines disposed on each side surface cross. Specifically,
in some embodiments, the actuator line L1 and the actuator line L2 are disposed on the left side surface of the carrier 53. One end of L1 is connected to a connection point A1 on the fastening part 51, and the other end is connected to a connection point A2 on the carrier 53. One end of the actuator line L2 is connected to a connection point B1 on the fastening part 51, and the other end is connected to a connection point B2 on the carrier 53. The connection point A1, the connection point B1, the connection point A2, and the connection point B2 are respectively close to four vertices of the left side surface. The connection point A1 and the connection point B1 are arranged in the Z-axis direction, and the connection point A1 is close to the bottom surface of the carrier 53. The connection point A2 and the connection point B2 are arranged in the Z-axis direction, and the connection point B2 is close to the bottom surface of the carrier 53. A force of the actuator line L1 acting on the carrier 53 upon contraction includes a component in a negative direction of the Z-axis and a component in a negative direction of the Y-axis. A force of the actuator line L2 acting on the carrier 53 upon contraction includes a component in a positive direction of the Z-axis and a component in the negative direction of the Y-axis.

In some embodiments, the actuator line L3 and the actuator line L4 are disposed on the front side surface of the carrier 53. One end of L3 is connected to a connection point C1 on the fastening part 51, and the other end is connected to a connection point C2 on the carrier 53. One end of the actuator line L4 is connected to a connection point D1 on the fastening part 51, and the other end is connected to a connection point D2 on the carrier 53. The connection point C1, the connection point D1, the connection point C2, and the connection point D2 are respectively close to four vertices of the front side surface. The connection point C1 and the connection point D1 are arranged in the Z-axis direction, and the connection point C1 is close to the bottom surface of the carrier 53. The connection point C2 and the connection point D2 are arranged in the Z-axis direction, and the connection point D2 is close to the bottom surface of the carrier 53. A force of the actuator line L3 acting on the carrier 53 upon contraction includes a component in the negative direction of the Z-axis and a component in a positive direction of the X-axis. A force of the actuator line L4 acting on the carrier 53 upon contraction includes a component in the positive direction of the Z-axis and a component in the positive direction of the X-axis. In addition, the connection point C2 and the connection point D2, and the connection point A2 and the connection point B2 are disposed near a same side of the carrier 53.

In some embodiments, the actuator line L5 and the actuator line L6 are disposed on the right side surface of the carrier 53. One end of L5 is connected to a connection point E1 on the fastening part 51, and the other end is connected to a connection point E2 on the carrier 53. One end of the actuator line L6 is connected to a connection point F1 on the fastening part 51, and the other end is connected to a connection point F2 on the carrier 53. The connection point E1, the connection point F1, the connection point E2, and the connection point F2 are respectively close to four vertices of the right side surface. The connection point E1 and the connection point F1 are arranged in the Z-axis direction, and the connection point E1 is close to the bottom surface of the carrier 53. The connection point E2 and the connection point F2 are arranged in the Z-axis direction, and the connection point F2 is close to the bottom surface of the carrier 53. A force of the actuator line L5 acting on the carrier 53 upon contraction includes a component in the negative direction of the Z-axis and a component in the positive direction of the Y-axis. A force of the actuator line L6 acting on the carrier 53 upon contraction includes a component in the positive direction of the Z-axis and a component in the positive direction of the Y-axis. In addition, the connection point E1 and the connection point F1, and the connection point C1 and the connection point D1 are disposed near a same side of the carrier 53.

In some embodiments, the actuator line L7 and the actuator line L8 are disposed on the rear side surface of the carrier 53. One end of L7 is connected to a connection point G1 on the fastening part 51, and the other end is connected to a connection point G2 on the carrier 53. One end of the actuator line L8 is connected to a connection point H1 on the fastening part 51, and the other end is connected to a connection point H2 on the carrier 53. The connection point G1, the connection point H1, the connection point G2, and the connection point H2 are respectively close to four vertices of the rear side surface. The connection point G1 and the connection point H1 are arranged in the Z-axis direction, and the connection point G1 is close to the bottom surface of the carrier 53. The connection point G2 and the connection point H2 are arranged in the Z-axis direction, and the connection point H2 is close to the bottom surface of the carrier 53. A force of the actuator line L7 acting on the carrier 53 upon contraction includes a component in the negative direction of the Z-axis and a component in the negative direction of the X-axis. A force of the actuator line L8 acting on the carrier 53 upon contraction includes a component in the positive direction of the Z-axis and a component in the negative direction of the X-axis. In addition, the connection point G2 and the connection point H2, and the connection point E2 and the connection point F2 are disposed near a same side of the carrier 53.

In some embodiments, the connection structure further includes an elastic apparatus that can provide a restoring force in six degrees of freedom directions for the carrier. Under an action of the elastic apparatus, an actuator line that does not contract or is not applied with a current/voltage may be stretched under an action of the elastic apparatus or another actuator line, to maintain a force balance of the carrier.

In some embodiments, when an actual structure of the carrier 53 is not a cuboid, a first reference surface, a second reference surface, a third reference surface, and a fourth reference surface that are parallel to the Z-axis may be established. The first reference surface and the third reference surface are symmetrically disposed with respect to a center of the carrier 53 and are parallel to the Y-axis, and the second reference surface and the fourth reference surface are symmetrically disposed with respect to the center of the carrier and are parallel to the X-axis. In this way, the first reference surface, the second reference surface, the third reference surface, and the fourth reference surface may form four surfaces (which are respectively equivalent to the left side surface, the front side surface, the right side surface, and the rear side surface) of a cuboid. In this case, the actuator line L1 to the actuator line L8 may be disposed on the first reference surface, the second reference surface, the third reference surface, and the fourth reference surface. For a manner of disposing the actuator line L1 to the actuator line L8 on the first reference surface, the second reference surface, the third reference surface, and the fourth reference surface, refer to the foregoing manner of disposing the actuator line L1 to the actuator line L8 on the left side surface, the front side surface, the right side surface, and the rear side surface. Details are not described herein.

It should be understood that the connection structure shown in FIG. 2 is merely an example. In some embodiments, the left side surface, the right side surface, the front side surface, and the rear side surface may be virtual planes instead of actual surfaces. This is not limited herein.

Based on the connection structure shown in FIG. 2, the mobile phone 1 may control each actuator line to contract by inputting different control signals (for example, applying different voltages, currents, or control signals to the actuator line, or not applying voltage or current) to the actuator line, to pull the carrier 53 to move. For example, the carrier 53 may be pulled to move in the Z-axis direction to control the camera 5 to focus, the carrier 53 may be pulled to move in the plane perpendicular to the Z-axis to control the camera 5 to perform image stabilization, or the carrier 53 may be pulled to move in another direction to adjust a photographing parameter.

For example, refer to FIG. 3. The mobile phone 1 may control the actuator line L2, the actuator line L4, the actuator line L6, and the actuator line L8 to contract at a same amplitude, to control the carrier 53 to move in the positive direction of the Z-axis. When the actuator line L2, the actuator line L4, the actuator line L6, and the actuator line L8 contract at the same amplitude, components of forces of the actuator line L2 and the actuator line L6 acting on the carrier 53 counteract each other in the Y direction, and components of forces of the actuator line L4 and the actuator line L8 acting on the carrier 53 counteract each other in the X direction. In other words, a direction of a resultant force F_{Z} of the actuator line L2, the actuator line L4, the actuator line L6, and the actuator line L8 acting on the carrier 53 is the positive direction of the Z-axis. Because the connection point B1, the connection point D1, the connection point F1, and the connection point H1 are fastened to the fastening part 52, the connection point B2, the connection point D2, the connection point F2, and the connection point H2 move in the positive direction of the Z-axis under an action of F_{Z}, so that the carrier 53 moves in the positive direction of the Z-axis.

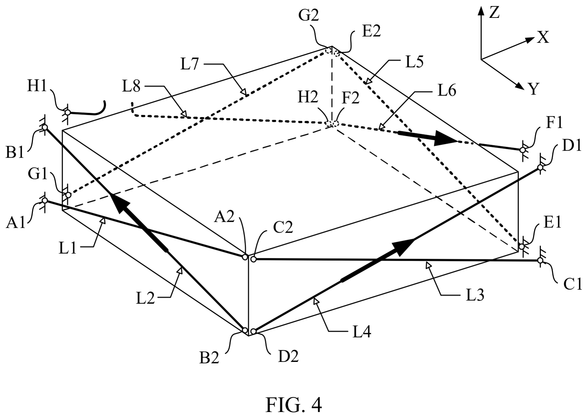

However, when one or more of the actuator line L2, the actuator line L4, the actuator line L6, and the actuator line L8 are disconnected, if the actuator line L2, the actuator line L4, the actuator line L6, and the actuator line L8 are still controlled to contract at the same amplitude, a direction of a resultant force of the actuator line L2, the actuator line L4, the actuator line L6, and the actuator line L8 acting on the carrier 53 is not the Z-axis direction. For example, refer to FIG. 4. When the actuator line L8 is disconnected, if the actuator line L2, the actuator line L4, and the actuator line L6 contract at the same amplitude, a resultant force of the actuator line L2, the actuator line L4, and the actuator line L6 acting on the carrier 53 has a component in the positive direction of the X-axis (that is, a component of a force of the actuator line L3 acting on the carrier 53 in the positive direction of the X-axis). In this case, the mobile phone 1 cannot accurately control the carrier 53 to move in the Z-axis direction. Consequently, the focusing function and the image stabilization function of the camera 5 fail.

To ensure that the electronic device can still accurately control the carrier in the SMA actuator to move when an actuator line in the SMA actuator is disconnected, an embodiment of this application provides a control method. When none of actuator lines in the SMA actuator is disconnected, and the carrier needs to be controlled to move in a first direction, the electronic device may control, through N actuator lines, the carrier in the SMA actuator to move in the first direction relative to the fastening part. When L (L≥1) actuator lines in the N actuator lines are disconnected, and the electronic device needs to control the carrier to move in the first direction, K (K≥2) actuator lines (referred to as target actuator lines below) whose resultant force acting on the carrier upon contraction is in the first direction may be selected from non-disconnected actuator lines. Then, the electronic device may control, based on the selected K actuator lines, the carrier of the SMA actuator to move relative to the fastening part in the first direction.

In this way, even if an actuator line in the SMA actuator in the electronic device is disconnected, if there is still a target actuator line whose resultant force acting on the carrier upon contraction is in a direction is the same as the first direction, the electronic device may drive, through the target actuator line, the carrier to move in the first direction.

In some embodiments, the electronic device may determine, in response to a first operation of a user, the first direction in which the carrier in the SMA actuator of the electronic device moves.

For example, the first operation may include an operation of starting the electronic device by the user, an operation of starting a camera by the user (for example, an operation of starting a camera application or another application that needs to invoke the camera), an operation of moving the electronic device by the user, an operation of adjusting a focal length of the electronic device by the user, and the like.

For example, in response to the operation of starting the electronic device by the user, the electronic device may determine the first direction based on a preset target position of the carrier relative to the fastening part and a current position of the carrier, and the current position and the target position. For example, the position that is of the carrier and that is preset by the electronic device relative to the fastening part is a first position, and the current position of the carrier is the second position. In this case, a direction pointing from the second position to the first position may be the first direction.

For another example, the electronic device may determine, based on the operation of starting the camera by the user, a to-be-used photographing focal length used by the camera to capture an image, and determine the first direction based on the determined focal length and a current focal length of the camera. For example, the electronic device determines, by using an auto-focus algorithm, that a position that is of the carrier and that corresponds to the focal length used by the camera to capture the image is the first position, and the current position of the carrier is the second position. In this case, a direction pointing from the second position to the first position may be the first direction.

For another example, in response to the operation of adjusting the focal length of the camera by the user, the electronic device may determine, based on a focal length adjustment manner (increasing the focal length or decreasing the focal length), the first direction in which the carrier moves. For example, if a position that is of the carrier and that corresponds to a focal length set by the user is the first position, and the current position of the carrier is the second position, a direction pointing from the second position to the first position may be the first direction.

For another example, the electronic device may determine, in response to the operation of moving the electronic device by the user, a direction opposite to a direction in which the user moves the electronic device as the first direction, to implement an image stabilization function of a target camera.

It should be understood that, in some embodiments, the first operation may further include another operation. This is not limited herein.

In some embodiments, the first direction may alternatively be determined based on a movement control signal generated in the electronic device (for example, when an application or a service in the electronic device implements an auto-focusing function or the image stabilization function, the movement control signal used to move the carrier in the first direction may be determined based on an image captured by the camera, a to-be-photographed target, and/or a movement status of the electronic device). For example, when none of the actuator lines in the SMA actuator is disconnected and the electronic device detects a first movement control signal that controls the carrier to move in the first direction, the electronic device may control, through the N actuator lines, the carrier in the SMA actuator to move relative to the fastening part in the first direction. When the L (L≥1) actuator lines in the N actuator lines are disconnected and the electronic device detects a second movement control signal that controls the carrier to move in the first direction, the K (K≥2) actuator lines (referred to as the target actuator lines below) whose resultant force acting on the carrier upon contraction is in the first direction may be selected from the non-disconnected actuator lines. Then, the electronic device may control, based on the selected K actuator lines, the carrier of the SMA actuator to move relative to the fastening part in the first direction.

For example, in the case shown in FIG. 3, if none of the actuator lines in the actuator line group 54 is disconnected, when the mobile phone 1 determines that the carrier 53 needs to be moved in the positive direction of the Z-axis (used as the first direction) to implement focusing of the camera 5, the mobile phone 1 may detect a control signal that controls the carrier to move in the positive direction of the Z-axis. Then, the mobile phone 1 may control the actuator line L2, the actuator line L4, the actuator line L6, and the actuator line L8 (used as the N actuator lines) to contract at a same amplitude, to control the carrier 53 to move in the positive direction of the Z-axis. If the actuator line L8 and/or the actuator line L4 are/is disconnected, when the mobile phone 1 determines that the carrier 53 needs to be moved in the positive direction of the Z-axis to implement focusing of the camera 5, the mobile phone 1 may detect the control signal that controls the carrier to move in the positive direction of the Z-axis, and control the actuator line L2 and the actuator line L6 (used as the L actuator lines) to contract at a same amplitude, to control the carrier 53 to move in the positive direction of the Z-axis.

In some embodiments, when the mobile phone 1 is powered on or when the camera is invoked for the first time after the mobile phone 1 is powered on, the mobile phone 1 may detect a line disconnection status of the actuator lines of the SMA actuator, and determine the L actuator lines to be used when controlling the carrier to move in the first direction. Then, when detecting that the carrier moves in the first direction, the mobile phone 1 may directly control, through the L actuator lines, the carrier to move in the first direction.

In some embodiments, when the mobile phone 1 needs to control the carrier to move in the first direction, the mobile phone 1 may also select, based on a line disconnection status of the actuator lines of the SMA actuator, the L actuator lines to be used when controlling the carrier to move in the first direction. Then, the mobile phone 1 drives, based on the selected L actuator lines, the carrier to move in the first direction.

In some embodiments, the target actuator line may be at least a part of non-disconnected actuator lines in the N actuator lines, may be another actuator line other than the N actuator lines, or may be a combination of a non-disconnected actuator line in the N actuator lines and another non-disconnected actuator line.

The following describes the technical solutions of this application by using an example in which the electronic device is the mobile phone 1 and with reference to a manner of connecting the actuator lines, the carrier, and the fastening part in the camera 5 shown in FIG. 2.

In some embodiments, when forces of the actuator line L1 and the actuator line L5 acting on the carrier 53 are decomposed along the Z-axis and an X-Y plane, components, in the X-Y plane, of the forces of the actuator line L1 and the actuator line L5 acting on the carrier 53 are parallel to each other and are in opposite directions, and components, in the Z-axis direction, of the forces of the actuator line L1 and the actuator line L5 acting on the carrier 53 are in a same direction.

In some embodiments, when forces of the actuator line L3 and the actuator line L7 acting on the carrier 53 in the camera 5 are decomposed along the Z-axis and the X-Y plane, components, in the X-Y plane, of the forces of the actuator line L3 and the actuator line L7 acting on the carrier 53 are parallel to each other and are in opposite directions, and components, in the Z-axis direction, of the forces of the actuator line L3 and the actuator line L7 acting on the carrier 53 are in a same direction.

In some embodiments, when forces of the actuator line L2 and the actuator line L6 acting on the carrier 53 are decomposed along the Z-axis and the X-Y plane, components, in the X-Y plane, of the forces of the actuator line L2 and the actuator line L6 acting on the carrier 53 are parallel to each other and are in opposite directions, and components, in the Z-axis direction, of the forces of the actuator line L2 and the actuator line L6 acting on the carrier 53 are in a same direction.

In some embodiments, when forces of the actuator line L4 and the actuator line L8 acting on the carrier 53 are decomposed along the Z-axis and the X-Y plane, components, in the X-Y plane, of the forces of the actuator line L4 and the actuator line L8 acting on the carrier 53 are parallel to each other and are in opposite directions, and components, in the Z-axis direction, of the forces of the actuator line L4 and the actuator line L8 acting on the carrier 53 are in a same direction.

For ease of description, when forces acting on the carrier 53 are decomposed along the Z-axis and the X-Y plane, two actuator lines whose components of forces in the X-Y plane are parallel to each other and are in opposite directions and whose components of forces in the Z-axis direction are in a same direction are referred to as an actuator line pair below. For example, in FIG. 2, the actuator line L1 and the actuator line L5 are an actuator line pair, the actuator line L3 and the actuator line L7 are an actuator line pair, the actuator line L2 and the actuator line L6 are an actuator line pair, and the actuator line L4 and the actuator line L8 are an actuator line pair.

It should be understood that, when two actuator lines in one actuator line pair contract at a same amplitude, a direction of a resultant force acting on the carrier 53 is in the Z-axis direction.

In some embodiments, when forces of the actuator line L1, the actuator line L3, the actuator line L5, and the actuator line L7 acting on the carrier 53 are decomposed along the Z-axis and the X-Y plane, directions of components of the forces of the actuator line L1, the actuator line L3, the actuator line L5, and the actuator line L7 acting on the carrier 53 in the Z-axis direction are all the positive direction of the Z-axis. For ease of description, in the following, a plurality of actuator lines whose directions of components of forces acting on the carrier 53 in the Z-axis direction are the positive direction of the Z-axis are referred to as a positive pulling force actuator line group.

In some embodiments, when forces of the actuator line L2, the actuator line L4, the actuator line L6, and the actuator line L8 acting on the carrier 53 are decomposed along the Z-axis and the X-Y plane, directions of components of the forces of the actuator line L2, the actuator line L4, the actuator line L6, and the actuator line L8 acting on the carrier 53 in the Z-axis direction are all the negative direction of the Z-axis. For ease of description, in the following, a plurality of actuator lines whose directions of components of forces acting on the carrier 53 in the Z-axis direction are the negative direction of the Z-axis are referred to as a negative pulling force actuator line group.

It should be understood that, in the SMA actuator, the positive pulling force actuator line group may include at least one actuator line pair (for example, one, two, three, or four actuator line pairs), and the negative pulling force actuator line group may include at least one actuator line pair (for example, one, two, three, or four actuator line pairs).

First, a case in which the mobile phone 1 controls the carrier 53 to move when at least one actuator line in one actuator line pair in the positive pulling force actuator line group is disconnected is described.

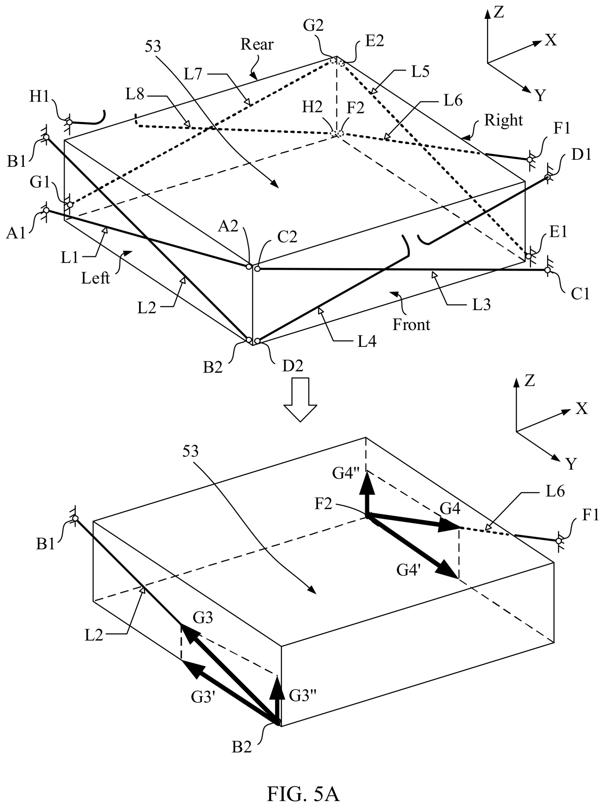

FIG. 5A is a diagram of a case in which the mobile phone 1 controls the carrier 53 to move in the positive direction of the Z-axis when at least one of the actuator line L8 and the actuator line L4 is disconnected according to some embodiments of this application.

Refer to FIG. 5A. When at least one of the actuator line L8 and the actuator line L4 in the camera 5 is disconnected, the mobile phone 1 may control, through the actuator line L2 and the actuator line L6, the carrier 53 to move in the positive direction of the Z-axis. For example, when the actuator line L8 or the actuator line L4 is disconnected, the mobile phone 1 may control the actuator line L2 and the actuator line L6 to contract at a same amplitude, to control the carrier 53 to move in the positive direction of the Z-axis.

Still refer to FIG. 5A. When the actuator line L2 and the actuator line L6 contract at the same amplitude, a force G3 of the actuator line L2 acting on the carrier 53 has a component G3' in the Y direction (in the negative direction of the Y-axis) and a component G3" in the positive direction of the Z-axis, and a force G2 of the actuator line L6 acting on the carrier 53 has a component G4' in the Y direction (in the positive direction of the Y-axis) and a component G4" in the positive direction of the Z-axis. Because the actuator line L2 and the actuator line L6 contract at the same amplitude, G3' and G4' have a same value and opposite directions, and a direction of a resultant force of the actuator line L2 and the actuator line L6 acting on the carrier 53 is the positive direction of the Z-axis (that is, a resultant force of G3" and G4"). Because the connection point B1 and the connection point F1 are fastened to the fastening part 52, the connection point B2 and the connection point F2 move in the positive direction of the Z-axis under an action of a force in the positive direction of the Z-axis, so that the carrier 53 moves in the positive direction of the Z-axis. In this way, the mobile phone 1 may control, through the actuator line L2 and the actuator line L6, the carrier 53 to move relative to the image sensor 12 in the Z-axis direction, to implement focusing of the camera 5.

It should be understood that, in the case shown in FIG. 5A, because none of the actuator line L1, the actuator line L3, the actuator line L5, and the actuator line L7 is disconnected, the mobile phone 1 may control, through one or two actuator line pairs in the negative pulling force actuator line group, the carrier 53 to move in the negative direction of the Z-axis.

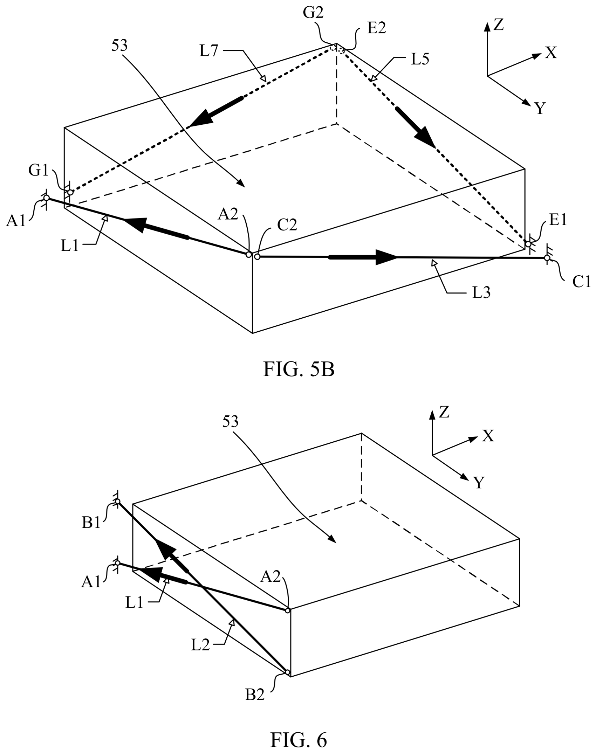

For example, FIG. 5B is a diagram of a case in which the mobile phone 1 controls the carrier 53 to move in the negative direction of the Z-axis when at least one actuator line in the actuator line pair corresponding to the actuator line L8 and the actuator line L4 is disconnected according to some embodiments of this application.

Refer to FIG. 5B. In some embodiments, the actuator line L1 and the actuator line L5 may contract at a same amplitude, and the actuator line L3 and the actuator line L7 may also contract at a same amplitude. Because the actuator line L1 and the actuator line L5 are actuator lines in a same actuator line pair and contract at the same amplitude, components of forces of the actuator line L1 and the actuator line L5 acting on the carrier 53 counteract each other in the Y-axis direction, and a direction of a resultant force is the negative direction of the Z-axis. Similarly, because the actuator line L3 and the actuator line L7 are actuator lines in a same actuator line pair and contract at the same amplitude, components of forces of the actuator line L1 and the actuator line L5 acting on the carrier 53 counteract each other in the X-axis direction, and a direction of a resultant force is the negative direction of the Z-axis. Therefore, a direction of a resultant force of the actuator line L1, the actuator line L3, the actuator line L5, and the actuator line L7 acting on the carrier 53 is the negative direction of the Z-axis. Because the connection point A1, the connection point C1, the connection point E1, and the connection point G1 are fastened to the fastening part 52, the connection point A2, the connection point C2, the connection point E2, and the connection point G2 move in the negative direction of the Z-axis, so that the carrier 53 moves in the negative direction of the Z-axis.

In some embodiments, the mobile phone 1 may alternatively generate, by controlling only the actuator line L1 and the actuator line L5 to contract at the same amplitude, a resultant force acting on the carrier 53 in the negative direction of the Z-axis, to drive the carrier 53 to move in the negative direction of the Z-axis.

In some embodiments, the mobile phone 1 may alternatively generate, by controlling only the actuator line L3 and the actuator line L7 to contract at the same amplitude, a resultant force acting on the carrier 53 in the negative direction of the Z-axis, to drive the carrier 53 to move in the negative direction of the Z-axis.

In other words, when none of actuator lines in the plurality of actuator line pairs in the negative pulling force actuator line group is disconnected, the mobile phone 1 may control, through one or more of the plurality of actuator line pairs, the carrier 53 to move in the negative direction of the Z-axis. Similarly, when none of actuator lines in the plurality of actuator line pairs in the positive pulling force actuator line group is disconnected, the mobile phone 1 may control, through one or more of the plurality of actuator line pairs, the carrier 53 to move in the positive direction of the Z-axis.

In the case shown in FIG. 5A, because none of the actuator line L1, the actuator line L3, the actuator line L5, and the actuator line L7 is disconnected, the mobile phone 1 may still control the carrier 53 to move in a plane perpendicular to the Z-axis, to implement the image stabilization function of the camera 5.

In some embodiments, for the case shown in FIG. 5A, refer to FIG. 6. The mobile phone 1 may control the actuator line L1 and the actuator line L2 to be shortened by a same amplitude, to control the carrier 53 to move in the negative direction of the Y-axis. In this case, components of forces of the actuator line L1 and the actuator line L2 acting on the carrier 53 counteract each other in the Z-axis direction. In other words, a direction of a resultant force of the actuator line L1 and the actuator line L2 acting on the carrier 53 is the negative direction of the Y-axis. Because the connection point A1 and the connection point B1 are fastened to the fastening part 52, the connection point A2 and the connection point B2 move in the negative direction of the Y-axis under an action of a force in the negative direction of the Y-axis, to drive the carrier 53 to move in the negative direction of the Y-axis.

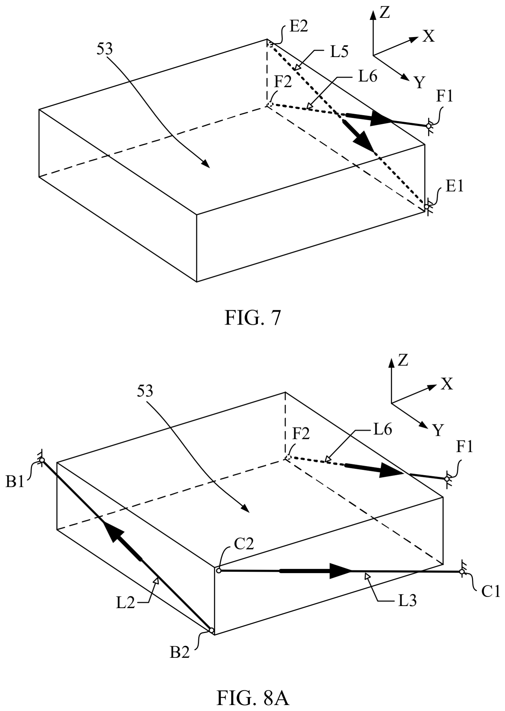

In some embodiments, for the case shown in FIG. 5A, refer to FIG. 7. The mobile phone 1 may alternatively control the actuator line L5 and the actuator line L6 to be shortened, to control the carrier 53 to move in the positive direction of the Y-axis. In this case, components of forces of the actuator line L5 and the actuator line L6 acting on the carrier 53 counteract each other in the Z-axis direction. In other words, a direction of a resultant force of the actuator line L5 and the actuator line L6 acting on the carrier 53 is the positive direction of the Y-axis. Because the connection point E1 and the connection point F1 are fastened to the fastening part 52, the connection point E2 and the connection point F2 move in the positive direction of the Y-axis under an action of a force in the positive direction of the Y-axis, to drive the carrier 53 to move in the positive direction of the Y-axis.

In some embodiments, for the case shown in FIG. 5A, refer to FIG. 8A. The mobile phone 1 may control the actuator line L2 and the actuator line L6 to present a shortening tendency, and control the actuator line L3 to be shortened, to control the carrier 53 to move in the positive direction of the X-axis. In this case, a resultant force of the actuator line L2 and the actuator line L6 acting on the carrier 53 is in the positive direction of the Z-axis, and is counteracted by a component of a force of the actuator line L3 acting on the carrier 53 in the negative direction of the Z-axis. In other words, a direction of a resultant force of the actuator line L2, the actuator line L6, and the actuator line L3 acting on the carrier 53 is a component of a force of the actuator line L3 acting on the carrier 53 in the positive direction of the X-axis. Because the connection point B1, the connection point C1, and the connection point F1 are fastened to the fastening part 52, the connection point C2 moves in the positive direction of the X-axis under an action of the component of the force of the actuator line L3 acting on the carrier 53 in the positive direction of the X-axis, to drive the carrier 53 to move in the positive direction of the X-axis.

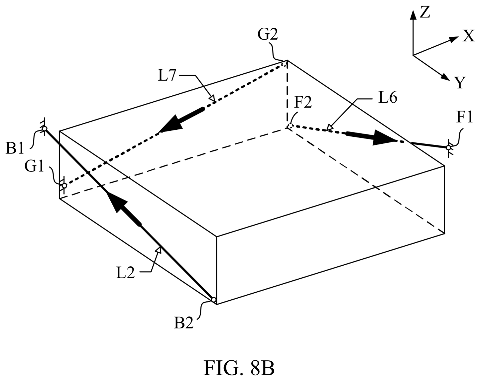

In some embodiments, for the case shown in FIG. 5A, refer to FIG. 8B. The mobile phone 1 may control the actuator line L2 and the actuator line L6 to present a shortening tendency, and control the actuator line L7 to be shortened, to control the carrier 53 to move in the negative direction of the X-axis. In this case, a resultant force of the actuator line L2 and the actuator line L6 acting on the carrier 53 is in the positive direction of the Z-axis, and is counteracted by a component of a force of the actuator line L7 acting on the carrier 53 in the negative direction of the Z-axis. In other words, a direction of a resultant force of the actuator line L2, the actuator line L6, and the actuator line L7 acting on the carrier 53 is a component of a force of the actuator line L7 acting on the carrier 53 in the negative direction of the X-axis. Because the connection point B1, the connection point G1, and the connection point F1 are fastened to the fastening part 52, the connection point G2 moves in the negative direction of the X-axis under an action of the component of the force of the actuator line L7 acting on the carrier 53 in the negative direction of the X-axis, to drive the carrier 53 to move in the negative direction of the X-axis.

It should be understood that when at least one of the actuator line L2 and the actuator line L6 is disconnected, or when at least one of the actuator line L1 and the actuator line L5 is disconnected, or when at least one of the actuator line L3 and the actuator line L7 is disconnected, for a manner in which the mobile phone 1 controls the carrier 5 to move, refer to the foregoing case in which at least one of the actuator line L8 and the actuator line L4 is disconnected. Details are not described herein again.

The following describes a solution in which the mobile phone 1 controls the carrier 53 to move when at least one actuator line in one actuator line pair in the positive pulling force actuator line group is disconnected, and at least one actuator line in one actuator line pair in the negative pulling force actuator line group is also disconnected.

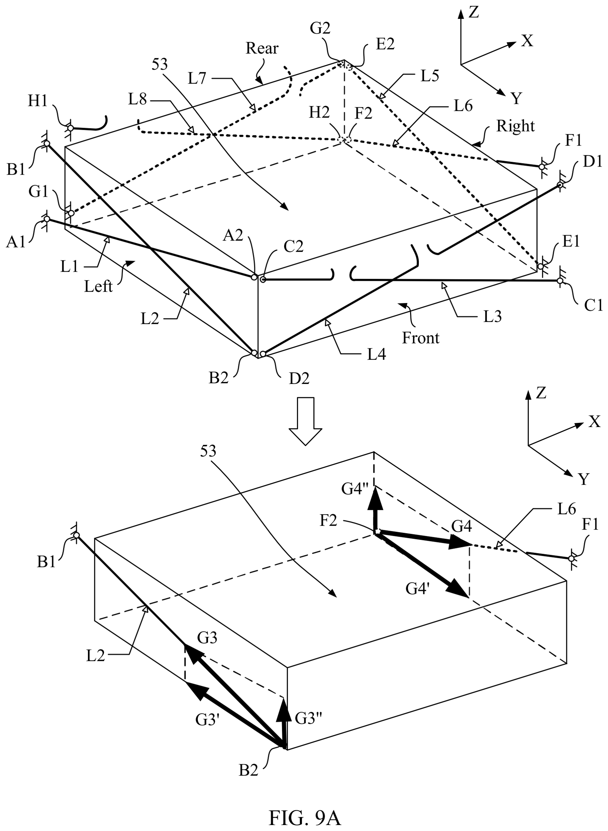

FIG. 9A is a diagram of a case in which the mobile phone 1 controls the carrier 53 to move in the positive direction of the Z-axis when at least one of the actuator line L8 and the actuator line L4 is disconnected and at least one of the actuator line L7 and the actuator line L3 is disconnected according to some embodiments of this application.

Refer to FIG. 9A. When at least one of the actuator line L8 and the actuator line L4 in the camera 5 is disconnected, and at least one of the actuator line L7 and the actuator line L3 is disconnected, the mobile phone 1 may control, through the actuator line L2 and the actuator line L6, the carrier 53 to move in the positive direction of the Z-axis.

Refer to FIG. 9A. When at least one of the actuator line L8 and the actuator line L4 is disconnected, and at least one of the actuator line L7 and the actuator line L3 is disconnected, the mobile phone 1 may control the actuator line L2 and the actuator line L6 to contract at a same amplitude, to control the carrier 53 to move in the positive direction of the Z-axis. In this case, a force G3 of the actuator line L2 acting on the carrier 53 has a component G3' in the Y direction (in the negative direction of the Y-axis) and a component G3" in the positive direction of the Z-axis, and a force G4 of the actuator line L6 acting on the carrier 53 has a component G4' in the Y direction (in the positive direction of the Y-axis) and a component G4" in the positive direction of the Z-axis. Because the actuator line L2 and the actuator line L6 contract at the same amplitude, G3' and G4' have a same value and opposite directions, and a direction of a resultant force of the actuator line L2 and the actuator line L6 acting on the carrier 53 is the positive direction of the Z-axis. Because the connection point B1 and the connection point F1 are fastened to the fastening part 52, the connection point B2 and the connection point F2 move in the positive direction of the Z-axis under an action of a force in the positive direction of the Z-axis, so that the carrier 53 moves in the positive direction of the Z-axis. In this way, the mobile phone 1 may control, through the actuator line L2 and the actuator line L6, the carrier 53 to move relative to the image sensor 12 in the positive direction of the Z-axis, to implement focusing of the camera 5.

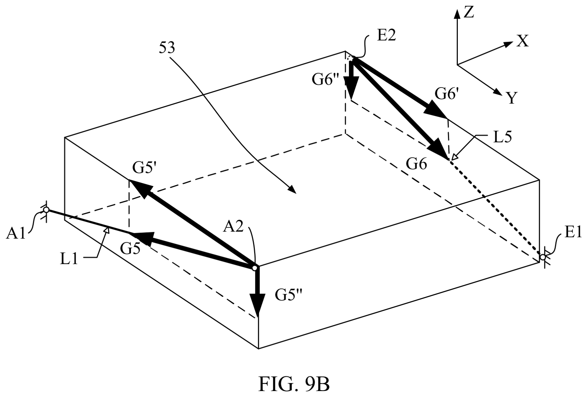

In some embodiments, for the case shown in FIG. 9A, the mobile phone 1 may alternatively control the actuator line L1 and the actuator line L5 to contract at a same amplitude, to control the carrier 53 to move relative to the image sensor 12 in the negative direction of the Z-axis, to implement focusing of the camera 5. For example, refer to FIG. 9B. A force G5 of the actuator line L1 acting on the carrier 53 has a component G3' in the Y direction (in the negative direction of the Y-axis) and a component G5" in the negative direction of the Z-axis, and a force G6 of the actuator line L5 acting on the carrier 53 has a component G6' in the Y direction (in the positive direction of the Y-axis) and a component G6" in the negative direction of the Z-axis. Because the actuator line L1 and the actuator line L5 contract at a same amplitude, G5' and G6' have a same value and opposite directions, and a direction of a resultant force of the actuator line L1 and the actuator line L5 acting on the carrier 53 is the negative direction of the Z-axis. Because the connection point A1 and the connection point E1 are fastened to the fastening part 52, the connection point A2 and the connection point E2 move in the negative direction of the Z-axis under an action of a force in the negative direction of the Z-axis, so that the carrier 53 moves in the negative direction of the Z-axis. In this way, the mobile phone 1 may control, through the actuator line L1 and the actuator line L5, the carrier 53 to move relative to the image sensor 12 in the negative direction of the Z-axis, to implement focusing of the camera 5.

In some embodiments, for the case shown in FIG. 9A, the mobile phone 1 may control the actuator line L1 and the actuator line L2 to contract at a same amplitude, to control the carrier 53 to move in the negative direction of the Y-axis. For details, refer to the embodiment shown in FIG. 6. Details are not described herein.

In some embodiments, for the case shown in FIG. 9A, the mobile phone 1 may control the actuator line L5 and the actuator line L6 to contract at a same amplitude, to control the carrier 53 to move in the positive direction of the Y-axis. For details, refer to the embodiment shown in FIG. 7. Details are not described herein.

In some embodiments, for the case shown in FIG. 9A, when both the actuator line L3 and the actuator line L7 are disconnected, the mobile phone 1 cannot move the carrier 53 in the X direction.

In some embodiments, for the case shown in FIG. 9A, when the actuator line L7 is disconnected and the actuator line L3 is not disconnected, the mobile phone 1 may control the actuator line L2 and the actuator line L6 to present a contraction tendency, and control the actuator line L3 to contract, to control the carrier 53 to move in the positive direction of the X-axis. For details, refer to the embodiment shown in FIG. 8A. Details are not described herein again.

In some embodiments, for the case shown in FIG. 9A, when the actuator line L3 is disconnected and the actuator line L7 is not disconnected, the mobile phone 1 may control the actuator line L2 and the actuator line L6 to present a contraction tendency, and control the actuator line L7 to contract, to control the carrier 53 to move in the negative direction of the X-axis. For details, refer to the embodiment shown in FIG. 8B. Details are not described herein again.

It should be understood that, when at least one of the actuator line L2 and the actuator line L6 is disconnected and at least one of the actuator line L1 and the actuator line L5 is disconnected, refer to the foregoing case in which at least one of the actuator line L8 and the actuator line L4 is disconnected and at least one of the actuator line L7 and the actuator line L3 is disconnected. Details are not described herein again.

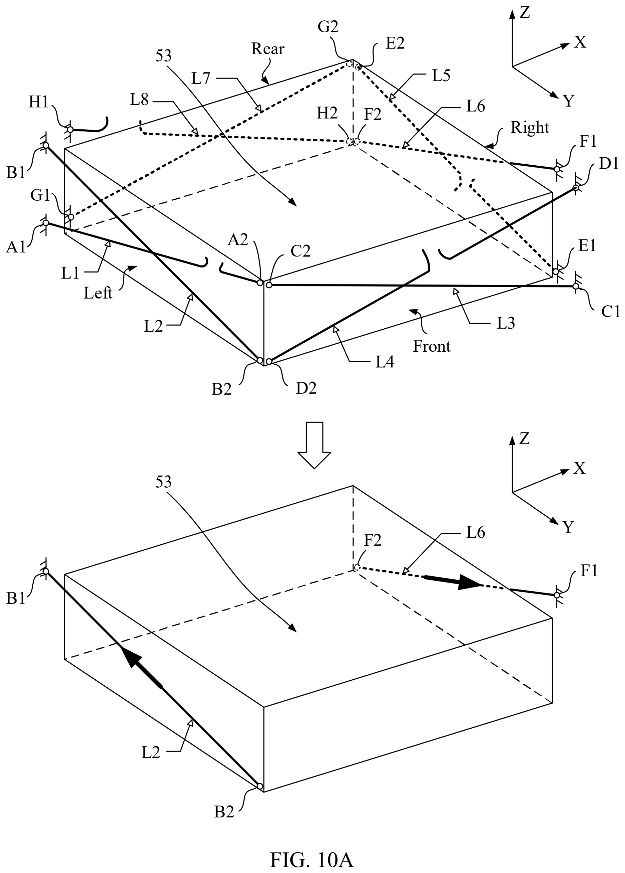

FIG. 10A is a diagram of a case in which the mobile phone 1 controls the carrier 53 to move in the positive direction of the Z-axis when at least one of the actuator line L8 and the actuator line L4 is disconnected and at least one of the actuator line L1 and the actuator line L5 is disconnected according to some embodiments of this application.

As shown in FIG. 10A, when at least one of the actuator line L8 and the actuator line L4 is disconnected, and at least one of the actuator line L1 and the actuator line L5 is disconnected, the mobile phone 1 may control the actuator line L2 and the actuator line L6 to contract at a same amplitude, to control the carrier 53 to move in the positive direction of the Z-axis. For details, refer to the embodiment shown in FIG. 9A. Details are not described herein again.

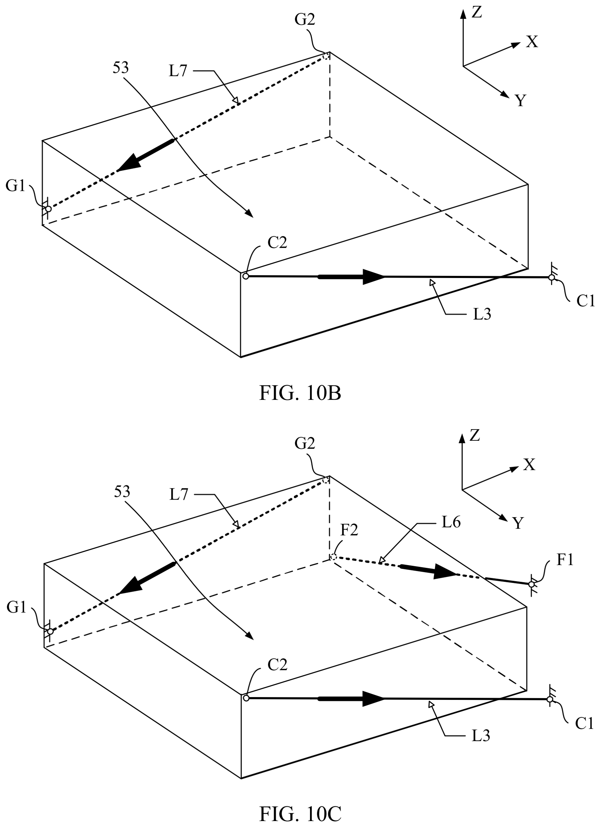

In some embodiments, for the case shown in FIG. 10A, refer to FIG. 10B. The mobile phone 1 may alternatively control the actuator line L3 and the actuator line L7 to contract at a same amplitude, to control the carrier 53 to move relative to the image sensor 12 in the negative direction of the Z-axis, to implement focusing of the camera 5. In this case, a component of a force of the actuator line L3 acting on the carrier 53 in the X direction and a component of a force of the actuator line L7 acting on the carrier 53 in the X direction counteract each other, and a direction of a resultant force of the actuator line L3 and the actuator line L7 acting on the carrier 53 is the negative direction of the Z-axis. Because the connection point C1 and the connection point G1 are fastened to the fastening part 52, the connection point C2 and the connection point G2 move in the negative direction of the Z-axis under an action of a force in the negative direction of the Z-axis, so that the carrier 53 moves in the negative direction of the Z-axis. In this way, the mobile phone 1 may control, through the actuator line L3 and the actuator line L7, the carrier 53 to move relative to the image sensor 12 in the negative direction of the Z-axis, to implement focusing of the camera 5.

In some embodiments, for the case shown in FIG. 10A, the mobile phone 1 may control the actuator line L2 and the actuator line L6 to present a shortening tendency, and control the actuator line L3 to be shortened, to control the carrier 53 to move in the positive direction of the X-axis. For details, refer to the embodiment shown in FIG. 8A. Details are not described herein again.

In some embodiments, for the case shown in FIG. 10A, the mobile phone 1 may control the actuator line L2 and the actuator line L6 to present a shortening tendency, and control the actuator line L7 to be shortened, to control the carrier 53 to move in the negative direction of the X-axis. For details, refer to the embodiment shown in FIG. 8B. Details are not described herein again.

In some embodiments, for the case shown in FIG. 10A, refer to FIG. 10C. The mobile phone 1 may control the actuator line L3 and the actuator line L7 to present a shortening tendency, and control the actuator line L6 to be shortened, to control the carrier 53 to move in the positive direction of the Y-axis. In this case, a resultant force of the actuator line L3 and the actuator line L7 acting on the carrier 53 is in the positive direction of the Z-axis, and is counteracted by a component of a force of the actuator line L6 acting on the carrier 53 in the negative direction of the Z-axis. In other words, a direction of a resultant force of the actuator line L3, the actuator line L6, and the actuator line L7 acting on the carrier 53 is a component of a force of the actuator line L6 acting on the carrier 53 in the positive direction of the Y-axis. Because the connection point C1, the connection point G1, and the connection point F1 are fastened to the fastening part 52, the connection point F2 moves in the positive direction of the Y-axis under an action of the component of the force of the actuator line L6 acting on the carrier 53 in the positive direction of the Y-axis, to drive the carrier 53 to move in the positive direction of the Y-axis.

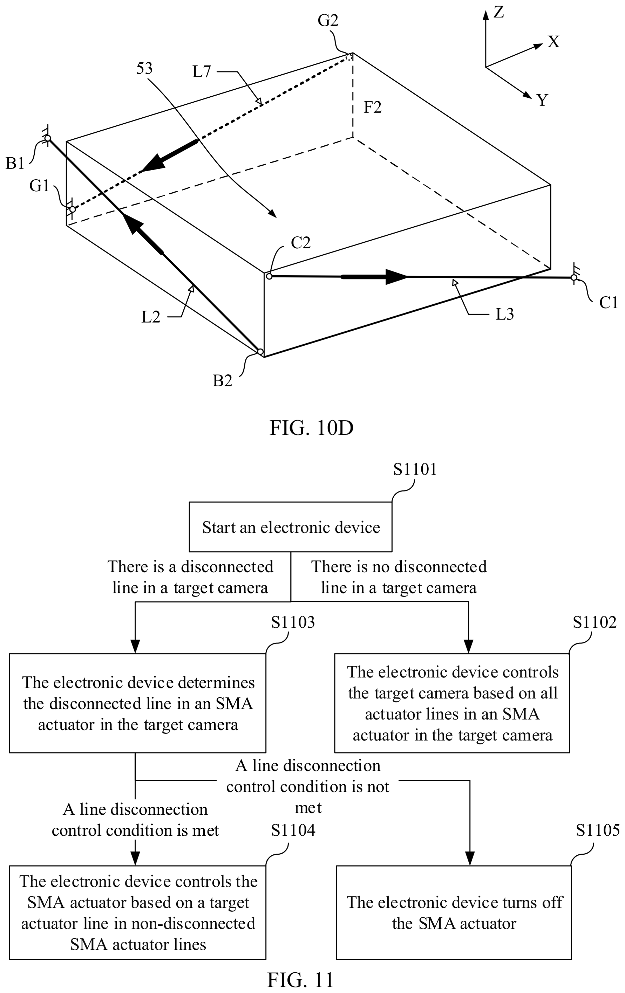

In some embodiments, for the case shown in FIG. 10A, refer to FIG. 10D. The mobile phone 1 may control the actuator line L3 and the actuator line L7 to present a shortening tendency, and control the actuator line L2 to be shortened, to control the carrier 53 to move in the negative direction of the Y-axis. In this case, a resultant force of the actuator line L3 and the actuator line L7 acting on the carrier 53 is in the positive direction of the Z-axis, and is counteracted by a component of a force of the actuator line L2 acting on the carrier 53 in the negative direction of the Z-axis. In other words, a direction of a resultant force of the actuator line L3, the actuator line L2, and the actuator line L7 acting on the carrier 53 is a component of a force of the actuator line L2 acting on the carrier 53 in the negative direction of the Y-axis. Because the connection point C1, the connection point G1, and the connection point B1 are fastened to the fastening part 52, the connection point B2 moves in the negative direction of the Y-axis under an action of the component of the force of the actuator line L2 acting on the carrier 53 in the negative direction of the Y-axis, to drive the carrier 53 to move in the negative direction of the Y-axis.

It should be understood that, for a manner in which the mobile phone 1 controls the carrier 53 to move when at least one of the actuator line L2 and the actuator line L6 is disconnected and at least one of the actuator line L3 and the actuator line L7 is disconnected, refer to a case in which at least one of the actuator line L8 and the actuator line L4 is disconnected and at least one of the actuator line L1 and the actuator line L5 is disconnected. Details are not described herein again.

Based on the foregoing embodiment, according to the control method provided in this embodiment of this application, when an actuator line in the SMA actuator is disconnected, the SMA actuator may be controlled based on a non-disconnected actuator line, so that the carrier can continue to move. In this way, a camera using the SMA actuator can continue to retain at least some of the focusing function and the image stabilization function of the camera.

The following describes the technical solutions of this application by using an example in which the electronic device is the mobile phone 1 and with reference to a manner of connecting the actuator lines, the carrier, and the fastening part in the camera 5 shown in FIG. 2 and the cases shown in FIG. 5A and FIG. 9B.

FIG. 11 is a schematic flowchart of a control method according to some embodiments of this application. The procedure may be performed by an electronic device, for example, the mobile phone 1. As shown in FIG. 11, the procedure includes the following steps.

S1101: Start the electronic device.

After being started, the electronic device triggers the control method provided in embodiments of this application.

In some embodiments, when or after the electronic device is started, the electronic device may determine, in response to a first operation, a first direction in which an SMA actuator of a target camera is controlled to move.

In some embodiments, the first operation may include an operation of starting the electronic device by a user, an operation of starting the target camera by the user (for example, an operation of starting a camera application or another application that needs to invoke the camera), an operation of adjusting a focal length of the camera by the user, an operation of moving the electronic device by the user, and the like.

For example, in response to the operation of starting the electronic device by the user, the electronic device may determine, based on a target position of the carrier relative to a fastening part and a current position of the carrier, the first direction pointing from the current position to the target position.

For another example, the electronic device may determine, based on the operation of starting the camera by the user and an image captured by the camera, a focal length required for photographing, and then determine, based on the determined focal length and a current focal length of the camera, the first direction in which the carrier moves.

For another example, in response to the operation of adjusting the focal length of the camera by the user, the electronic device may determine, based on a focal length adjustment manner (increasing the focal length or decreasing the focal length), the first direction in which the carrier moves.

For another example, the electronic device may determine, in response to the operation of moving the electronic device by the user, a direction opposite to a direction in which the user moves the electronic device as the first direction, to implement an image stabilization function of the target camera.

It should be understood that, in some embodiments, when the electronic device is started, the electronic device may determine whether an actuator line in an SMA actuator of each camera in the electronic device is disconnected. This is not limited herein.

S1102: The electronic device controls the target camera based on all actuator lines in the SMA actuator in the target camera.

When there is no disconnected line in the SMA actuator in the target camera, the electronic device controls the target camera based on all the actuator lines in the SMA actuator in the target camera.

For example, when the target camera is the camera 5, if none of the actuator line L1 to the actuator line L8 is a disconnected line, the mobile phone 1 may control the carrier 53 to move based on the actuator line L1 to the actuator line L8, to implement focusing and image stabilization of the camera 5.

For example, the mobile phone 1 may control the actuator line L2, the actuator line L4, the actuator line L6, and the actuator line L8 to contract, to control the carrier 53 to move in the positive direction of the Z-axis, or may control the actuator line L1, the actuator line L3, the actuator line L5, and the actuator line L7 to contract, to control the carrier 53 to move in the negative direction of the Z-axis.

For another example, the mobile phone 1 may control the actuator line L1 and the actuator line L2 to contract, to control the carrier 53 to move in the negative direction of the Y-axis, and control the actuator line L5 and the actuator line L6 to contract, to control the carrier 53 to move in the positive direction of the Y-axis.

For another example, the mobile phone 1 may control the actuator line L7 and the actuator line L8 to contract, to control the carrier 53 to move in the negative direction of the X-axis, and control the actuator line L3 and the actuator line L4 to contract, to control the carrier 53 to move in the positive direction of the X-axis.

It should be understood that, in some embodiments, the mobile phone 1 may further simultaneously control partial motion of the carrier 53 in a plurality of directions of the X-axis, the Y-axis, and the Z-axis, so that composite motion of the carrier 53 is not in the X-axis, the Y-axis, and the Z-axis.

It should be understood that a disconnected line may be a physically broken actuator line in the SMA actuator, or an abnormal actuator line (for example, an actuator line whose resistance/current/voltage is inconsistent with a preset value or is not within a preset range).

For example, the electronic device may collect one or more of a current, voltage, and resistance of each actuator line in the SMA actuator in the target camera, and compare the collected information with the preset value or the preset range. When a collected current, voltage, or resistance of an actuator line is different from the preset value or exceeds the preset range, the electronic device may determine that the actuator line is a disconnected line. For example, when a current, voltage, or resistance of an actuator line is 0, the electronic device may determine that the actuator line is a disconnected line.

It should be understood that the target camera may be one or more of cameras of the electronic device.

S1103: The electronic device determines a disconnected line in the SMA actuator in the target camera.

When there is the disconnected line in the SMA actuator in the target camera, the electronic device determines the disconnected line in the SMA actuator in the target camera.

For example, in the case shown in FIG. 5A, when both the actuator line L8 and the actuator line L4 are disconnected, the actuator line L8 and the actuator line L4 are disconnected lines. When the actuator line L8 is disconnected and the actuator line L4 is not disconnected, the actuator line L8 is a disconnected line. When the actuator line L4 is disconnected and the actuator line L8 is not disconnected, the actuator line L4 is a disconnected line.

In some embodiments, the electronic device may collect one or more of a current, voltage, and resistance of each actuator line in the SMA actuator in the target camera, and compare the collected information with the preset value or the preset range. When a collected current, voltage, or resistance of an actuator line is different from the preset value or exceeds the preset range (for example, the current, voltage, or resistance is 0), the electronic device may determine that the actuator line is a disconnected line.

S1104: The electronic device controls the SMA actuator based on a target actuator line in non-disconnected SMA actuator lines.

When a line disconnection control condition is met, the electronic device controls a movement direction (for example, the first direction) of the carrier in the SMA actuator based on a requirement, and selects, from the non-disconnected SMA actuator lines, a plurality of actuator lines whose resultant force acting on the carrier is the same as the movement direction as target actuator lines for use. Then, the mobile phone 1 may control the target actuator lines to contract or to present a contraction tendency, to control the SMA actuator to move in the movement direction.

It should be understood that the line disconnection control condition indicates whether the non-disconnected SMA actuator line can drive the carrier in the SMA actuator.

In some embodiments, when at least one actuator line pair in each of a positive pulling force actuator line group and a negative pulling force actuator line group is not disconnected, the electronic device may determine that the line disconnection control condition is met.

For example, for the camera 5, the negative pulling force actuator line group includes the actuator line L1, the actuator line L3, the actuator line L5, and the actuator line L7, the actuator line L1 and the actuator line L5 are an actuator line pair, and the actuator line L3 and the actuator line L7 are an actuator line pair. The positive pulling force actuator line group includes the actuator line L2, the actuator line L4, the actuator line L6, and the actuator line L8, the actuator line L2 and the actuator line L6 are an actuator line pair, and the actuator line L4 and the actuator line L8 are an actuator line pair. Based on this, the mobile phone 1 may determine, in any one of the following cases, that the line disconnection control condition is not met:

Three or four of the actuator line L1, the actuator line L3, the actuator line L5, and the actuator line L7 are disconnected;
three or four of the actuator line L2, the actuator line L4, the actuator line L6, and the actuator line L8 are disconnected;
the actuator line L1 is disconnected and the actuator line L3 is disconnected;
the actuator line L5 is disconnected and the actuator line L7 is disconnected;
the actuator line L2 is disconnected and the actuator line L8 is disconnected; and
the actuator line L4 is disconnected and the actuator line L6 is disconnected.

It should be understood that, in some embodiments, the line disconnection control condition may alternatively include another condition. This is not limited herein.

For example, the electronic device may automatically determine, based on an image currently captured by the target camera, a target focal length corresponding to the image (or based on a target focal length selected by the user, or based on a target focal length determined based on a to-be-photographed target corresponding to a focus selected by the user), and control, based on the target actuator line in the non-disconnected SMA actuator lines, the SMA actuator to move along an Z-axis, so that a focal length used by the camera to capture the image is the target focal length.

In some embodiments, the electronic device may determine, by using an automatic focus (automatic focus, AF) algorithm, for example, a contrast detection automatic focus (contrast detection auto-focus, CDAF) algorithm or a phase detection automatic focus (phase detection auto-focus, PDAF) algorithm, the target focal length used by the target camera to capture the image, and control a movement direction of the carrier based on a current focal length of the target camera.

For example, the electronic device may alternatively control, based on a movement direction of the mobile phone 1 in a plane perpendicular to an optical axis of the target camera and the target actuator line in the non-disconnected SMA actuator lines, the SMA actuator to move reversely in the plane perpendicular to the optical axis of the target camera, to implement image stabilization of the target camera.

The following describes a manner of determining the target actuator line with reference to different line disconnection cases by using an example in which the electronic device is the mobile phone 1 and the target camera is the camera 5.

In some embodiments, when the actuator line L8 and/or the actuator line L4 are/is disconnected lines, the target actuator line may be determined in the following manner:
corresponding to a case in which the focal length of the camera 5 is increased, determining the actuator line L2 and the actuator line L6 as target actuator lines;
corresponding to a case in which the focal length of the camera 5 is decreased, determining the actuator line L1, the actuator line L3, the actuator line L5, and the actuator line L7 as target actuator lines, determining the actuator line L1 and the actuator line L5 as target actuator lines, or determining the actuator line L3 and the actuator line L7 as target actuator lines;
corresponding to a case in which the carrier 53 is controlled to move in the positive direction of the X-axis, determining the actuator line L2, the actuator line L3, and the actuator line L6 as target actuator lines;
corresponding to a case in which the carrier 53 is controlled to move in the negative direction of the X-axis, determining the actuator line L2, the actuator line L7, and the actuator line L6 as target actuator lines;
corresponding to a case in which the carrier 53 is controlled to move in the positive direction of the Y-axis, determining the actuator line L5 and the actuator line L6 as target actuator lines; and
corresponding to a case in which the carrier 53 is controlled to move in the negative direction of the Y-axis, determining the actuator line L1 and the actuator line L2 as target actuator lines.

In some embodiments, when the actuator line L2 and/or the actuator line L6 are/is disconnected lines, the target actuator line may be determined in the following manner:
corresponding to a case in which the focal length of the camera 5 is increased, determining the actuator line L4 and the actuator line L8 as target actuator lines;
corresponding to a case in which the focal length of the camera 5 is decreased, determining the actuator line L1, the actuator line L3, the actuator line L5, and the actuator line L7 as target actuator lines, determining the actuator line L1 and the actuator line L5 as target actuator lines, or determining the actuator line L3 and the actuator line L7 as target actuator lines;
corresponding to a case in which the carrier 53 is controlled to move in the positive direction of the X-axis, determining the actuator line L3 and the actuator line L4 as target actuator lines;
corresponding to a case in which the carrier 53 is controlled to move in the negative direction of the X-axis, determining the actuator line L7 and the actuator line L8 as target actuator lines;
corresponding to a case in which the carrier 53 is controlled to move in the positive direction of the Y-axis, determining the actuator line L5, the actuator line L4, and the actuator line L8 as target actuator lines; and
corresponding to a case in which the carrier 53 is controlled to move in the negative direction of the Y-axis, determining the actuator line L1, the actuator line L4, and the actuator line L8 as target actuator lines.

In some embodiments, when the actuator line L1 and/or the actuator line L5 are/is disconnected lines, the target actuator line may be determined in the following manner:
corresponding to a case in which the focal length of the camera 5 is increased, determining the actuator line L2, the actuator line L4, the actuator line L6, and the actuator line L8 as target actuator lines, determining the actuator line L2 and the actuator line L4 as target actuator lines, or determining the actuator line L6 and the actuator line L8 as target actuator lines;
corresponding to a case in which the focal length of the camera 5 is decreased, determining the actuator line L3 and the actuator line L7 as target actuator lines;
corresponding to a case in which the carrier 53 is controlled to move in the positive direction of the X-axis, determining the actuator line L3 and the actuator line L4 as target actuator lines;
corresponding to a case in which the carrier 53 is controlled to move in the negative direction of the X-axis, determining the actuator line L7 and the actuator line L8 as target actuator lines;
corresponding to a case in which the carrier 53 is controlled to move in the positive direction of the Y-axis, determining the actuator line L6, the actuator line L3, and the actuator line L7 as target actuator lines; and
corresponding to a case in which the carrier 53 is controlled to move in the negative direction of the Y-axis, determining the actuator line L2, the actuator line L3, and the actuator line L7 as target actuator lines.

In some embodiments, when the actuator line L3 and/or the actuator line L7 are/is disconnected lines, the target actuator line may be determined in the following manner:
corresponding to a case in which the focal length of the camera 5 is increased, determining the actuator line L2, the actuator line L4, the actuator line L6, and the actuator line L8 as target actuator lines, determining the actuator line L2 and the actuator line L4 as target actuator lines, or determining the actuator line L6 and the actuator line L8 as target actuator lines;
corresponding to a case in which the focal length of the camera 5 is decreased, determining the actuator line L1 and the actuator line L5 as target actuator lines;
corresponding to a case in which the carrier 53 is controlled to move in the positive direction of the X-axis, determining the actuator line L4, the actuator line L1, and the actuator line L5 as target actuator lines;
corresponding to a case in which the carrier 53 is controlled to move in the negative direction of the X-axis, determining the actuator line L8, the actuator line L1, and the actuator line L5 as target actuator lines;
corresponding to a case in which the carrier 53 is controlled to move in the positive direction of the Y-axis, determining the actuator line L5 and the actuator line L6 as target actuator lines; and
corresponding to a case in which the carrier 53 is controlled to move in the negative direction of the Y-axis, determining the actuator line L1 and the actuator line L2 as target actuator lines.

In some embodiments, when at least one of the actuator line L8 and the actuator line L4 is a disconnected line, and at least one of the actuator line L7 and the actuator line L3 is a disconnected line, the target actuator line may be determined in the following manner:
corresponding to a case in which the focal length of the camera 5 is increased, determining the actuator line L2 and the actuator line L6 as target actuator lines;
corresponding to a case in which the focal length of the camera 5 is decreased, determining the actuator line L1 and the actuator line L5 as target actuator lines;
corresponding to a case in which the carrier 53 is controlled to move in the positive direction of the X-axis and the actuator line L3 is not a disconnected line, determining the actuator line L2, the actuator line L3, and the actuator line L6 as target actuator lines;
corresponding to a case in which the carrier 53 is controlled to move in the negative direction of the X-axis and the actuator line L7 is not a disconnected line, determining the actuator line L2, the actuator line L7, and the actuator line L6 as target actuator lines;
corresponding to a case in which the carrier 53 is controlled to move in the positive direction of the Y-axis, determining the actuator line L5 and the actuator line L6 as target actuator lines; and
corresponding to a case in which the carrier 53 is controlled to move in the negative direction of the Y-axis, determining the actuator line L1 and the actuator line L2 as target actuator lines.

In some embodiments, when at least one of the actuator line L2 and the actuator line L6 is a disconnected line, and at least one of the actuator line L7 and the actuator line L3 is a disconnected line, the target actuator line may be determined in the following manner:
corresponding to a case in which the focal length of the camera 5 is increased, determining the actuator line L4 and the actuator line L8 as target actuator lines;
corresponding to a case in which the focal length of the camera 5 is decreased, determining the actuator line L1 and the actuator line L5 as target actuator lines;
corresponding to a case in which the carrier 53 is controlled to move in the positive direction of the X-axis, determining the actuator line L1, the actuator line L5, and the actuator line L4 as target actuator lines;
corresponding to a case in which the carrier 53 is controlled to move in the negative direction of the X-axis, determining the actuator line L1, the actuator line L5, and the actuator line L8 as target actuator lines;
corresponding to a case in which the carrier 53 is controlled to move in the positive direction of the Y-axis, determining the actuator line L4, the actuator line L5, and the actuator line L8 as target actuator lines; and
corresponding to a case in which the carrier 53 is controlled to move in the negative direction of the Y-axis, determining the actuator line L1, the actuator line L4, and the actuator line L8 as target actuator lines.

In some embodiments, when at least one of the actuator line L4 and the actuator line L8 is a disconnected line, and at least one of the actuator line L5 and the actuator line L1 is a disconnected line, the target actuator line may be determined in the following manner:
corresponding to a case in which the focal length of the camera 5 is increased, determining the actuator line L2 and the actuator line L6 as target actuator lines;
corresponding to a case in which the focal length of the camera 5 is decreased, determining the actuator line L3 and the actuator line L7 as target actuator lines;
corresponding to a case in which the carrier 53 is controlled to move in the positive direction of the X-axis, determining the actuator line L3, the actuator line L2, and the actuator line L6 as target actuator lines;
corresponding to a case in which the carrier 53 is controlled to move in the negative direction of the X-axis, determining the actuator line L7, the actuator line L2, and the actuator line L6 as target actuator lines;
corresponding to a case in which the carrier 53 is controlled to move in the positive direction of the Y-axis, determining the actuator line L6, the actuator line L3, and the actuator line L7 as target actuator lines; and
corresponding to a case in which the carrier 53 is controlled to move in the negative direction of the Y-axis, determining the actuator line L2, the actuator line L3, and the actuator line L7 as target actuator lines.

In some embodiments, when at least one of the actuator line L2 and the actuator line L6 is a disconnected line, and at least one of the actuator line L5 and the actuator line L1 is a disconnected line, the target actuator line may be determined in the following manner:
corresponding to a case in which the focal length of the camera 5 is increased, determining the actuator line L8 and the actuator line L4 as target actuator lines;
corresponding to a case in which the focal length of the camera 5 is decreased, determining the actuator line L3 and the actuator line L7 as target actuator lines;
corresponding to a case in which the carrier 53 is controlled to move in the positive direction of the X-axis, determining the actuator line L3 and the actuator line L4 as target actuator lines;
corresponding to a case in which the carrier 53 is controlled to move in the negative direction of the X-axis, determining the actuator line L7 and the actuator line L8 as target actuator lines;
corresponding to a case in which the carrier 53 is controlled to move in the positive direction of the Y-axis and the actuator line L6 is not a disconnected line, determining the actuator line L6, the actuator line L3, and the actuator line L7 as target actuator lines; and
corresponding to a case in which the carrier 53 is controlled to move in the negative direction of the Y-axis and the actuator line L2 is not a disconnected line, determining the actuator line L2, the actuator line L3, and the actuator line L7 as target actuator lines.

S1105: The electronic device turns off the SMA actuator.

The electronic device turns off the SMA actuator when the line disconnection control condition is not met.

In some embodiments, when the line disconnection control condition is not met, the electronic device may further display prompt information, to prompt the user that the camera actuator is damaged and the focusing and image stabilization functions of the camera are to be disabled.

Based on the method provided in the foregoing embodiment, when an actuator line in the SMA actuator in the target camera is disconnected, and the line disconnection control condition is met, the electronic device may still control the actuator to move, to implement focusing and image stabilization functions of the target camera.

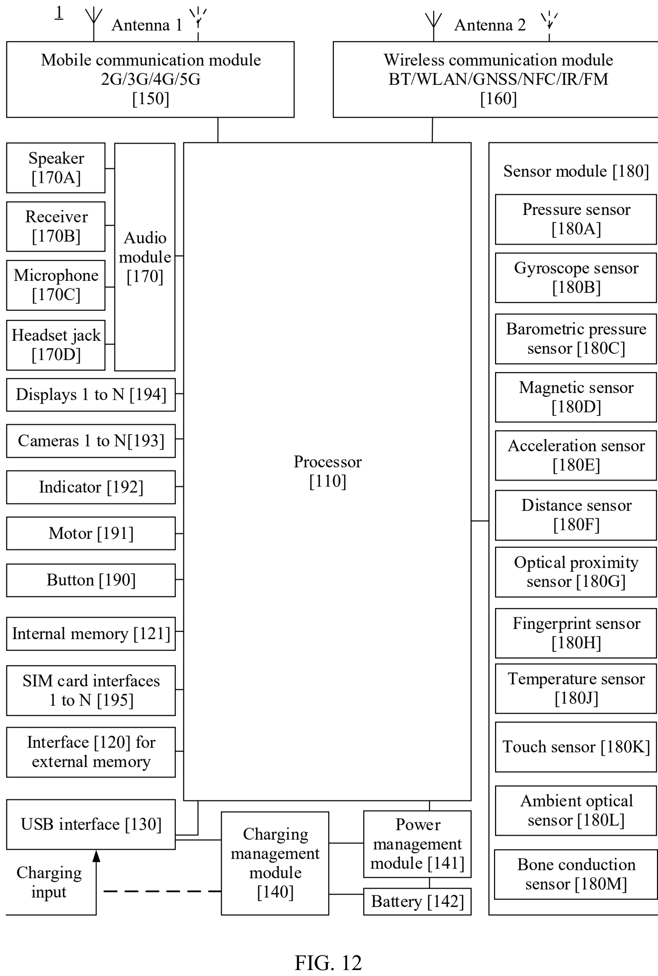

Specifically, FIG. 12 is a diagram of a structure of the mobile phone 1 according to some embodiments of this application.

As shown in FIG. 12, the mobile phone 1 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

The processor 110 may include one or more processing units. For example, the processor 110 may include a central processing unit (central processing unit, CPU), an application processor (application processor, AP), a modem processor, a graphics processing unit (graphics processing unit, GPU), an image signal processor (image signal processor, ISP), a microcontroller unit (microcontroller unit, MCU), a video codec, a digital signal processor (digital signal processor, DSP), a baseband processor, a neural-network processing unit (neural-network processing unit, NPU), a field programmable gate array (field programmable gate array, FPGA), and the like. In some embodiments, different processing units may be independent components, or may be integrated into one or more processors.

A memory may be further disposed in the processor 110, and is configured to store instructions and data. In some embodiments, the memory in the processor 110 is a cache memory. The memory may store instructions or data just used or cyclically used by the processor 110. When the processor 110 needs to use the instructions or the data again, the processor 110 may directly invoke the instructions or the data from the memory. This avoids repeated access, and reduces waiting time of the processor 110, thereby improving system efficiency.

In some embodiments, the processor 110 may be configured to execute instructions of the control method provided in the foregoing embodiments.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, and the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 1.

The USB interface 130 is an interface that conforms to a USB standard specification, and may be specifically a mini USB interface, a micro USB interface, a USB type-C interface, or the like. The USB interface 130 may be configured to connect to a charger to charge the mobile phone 1, or may be configured to transmit data between the mobile phone 1 and a peripheral device. For example, the interface may be further configured to connect to another electronic device, for example, an AR device or a display device, to display a user interface through the AR device or the display device.

The charging management module 140 is configured to receive charging input from the charger. The charging management module 140 supplies power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communication module 160, and the like.

A wireless communication function of the mobile phone 1 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal.

The mobile communication module 150 may provide a solution that is applied to the mobile phone 1 and that is used for wireless communication including 2G, 3G, 4G, 5G, and the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 and at least some modules of the processor 110 may be disposed in a same device.

The wireless communication module 160 may provide a solution that is applied to the mobile phone 1 and that is used for wireless communication, including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2.

The mobile phone 1 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the mobile phone 1 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 1 may include one or N cameras 193, where N is a positive integer greater than 1.

In some embodiments, at least one of the cameras 193 may be a camera driven by an SMA actuator, for example, the camera 5.

The interface 120 for external memory may be configured to be connected to an external storage card, for example, a Micro SD card, to extend a storage capability of the mobile phone 1. The external storage card communicates with the processor 110 through the interface 120 for external memory, to implement a data storage function, for example, storing files such as music and videos in the external storage card.

The internal memory 121 may be configured to store computer-executable program code, and the executable program code includes instructions. The internal memory 121 may include a program storage area and a data storage area. In some embodiments, the program storage area may store an operating system, an application required by at least one function, and the like, for example, instructions for the control method provided in the foregoing embodiments. The data storage area may store data created in a process of using the mobile phone 1, and the like, for example, a target application, a patch package of the target application, and a hot code configuration file of the target application. In addition, the internal memory 121 may include a high-speed random access memory, or may further include a non-volatile memory, for example, at least one magnetic disk storage device, a flash storage device, or a universal flash storage (universal flash storage, UFS). The processor 110 runs the instructions stored in the internal memory 121 and/or the instructions stored in the memory disposed in the processor 110, to perform various function applications of the mobile phone 1.

The mobile phone 1 may implement an audio function, for example, music playing or recording, by using the audio module 170, the speaker 170A, the receiver 170B, the microphone 170C, the headset jack 170D, the application processor.

The audio module 170 is configured to convert digital audio information into an analog audio signal for output, and is also configured to convert analog audio input into a digital audio signal. The audio module 170 may be further configured to code and decode an audio signal.

The speaker 170A, also referred to as a "loudspeaker", is configured to convert an electrical audio signal into a sound signal.

The receiver 170B, also referred to as an "earpiece", is configured to convert an electrical audio signal into a sound signal.

The microphone 170C, also referred to as a "mike" or a "mic", is configured to convert a sound signal into an electrical signal.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 1 determines pressure strength based on a capacitance change. When a touch operation is performed on the display 194, the mobile phone 1 detects intensity of the touch operation based on the pressure sensor 180A. The mobile phone 1 may also calculate a touch position based on a detection signal of the pressure sensor 180A.

The acceleration sensor 180E may detect accelerations of the mobile phone 1 in various directions (generally on three axes). When the mobile phone 1 is still, a magnitude and a direction of gravity may be detected. The acceleration sensor 180E may be further configured to identify a posture of the electronic device, and is applied to applications such as switching between a landscape mode and a portrait mode and a pedometer. In some embodiments, the mobile phone 1 may determine a movement status of the mobile phone 1 based on data collected by the acceleration sensor 180E, to determine a movement direction of a carrier in the camera 5.

The distance sensor 180F is configured to detect a distance between the mobile phone 1 and another object. In some embodiments, the mobile phone 1 may determine, by using the distance sensor 180F, a distance between the mobile phone 1 and a photographed object corresponding to a focus of the camera, and determine, based on the distance, a focal length of an image photographed by the camera. Then, the mobile phone 1 may determine a movement direction of the carrier in the SMA actuator in the camera based on the determined focal length and a current focal length of the camera.

The ambient optical sensor 180L is configured to sense ambient optical brightness. The mobile phone 1 may adaptively adjust brightness of the display 194 based on the sensed ambient optical brightness. The ambient optical sensor 180L may also be configured to automatically adjust white balance during photographing. The ambient optical sensor 180L may further cooperate with the optical proximity sensor 180G, to detect whether the mobile phone 1 is in a pocket, to avoid an accidental touch.

The fingerprint sensor 180H is configured to collect a fingerprint. The mobile phone 1 may use a feature of the collected fingerprint to implement fingerprint-based unlocking, application lock access, fingerprint-based photographing, fingerprint-based call answering, and the like.

The touch sensor 180K is also referred to as a "touch component". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer the detected touch operation to the application processor to determine a type of a touch event, and may provide a visual output related to the touch operation through the display 194. In some embodiments, the touch sensor 180K may alternatively be disposed on a surface of the mobile phone 1, and is located at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal.

The button 190 includes a power button, a volume button, and the like. The button 190 may be a mechanical button, or may be a touch button. The mobile phone 1 may receive button input, and generate button signal input related to user setting and function control of the mobile phone 1.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

It may be understood that a structure of the mobile phone 1 shown in this embodiment of this application does not constitute a specific limitation on the mobile phone 1. In some embodiments of this application, the mobile phone 1 may include more or fewer components than those shown in the figure, or combine some components, or split some components, or have different component arrangements. The components shown in the figure may be implemented by hardware, software, or a combination of software and hardware.

An embodiment of this application further provides a program product. When the program product is executed on a device, the device may be enabled to implement the control method provided in the foregoing embodiments.

An embodiment of this application further provides a readable storage medium. The readable storage medium stores instructions. When the instructions are executed by a device, the device is enabled to implement the control method provided in the foregoing embodiments.

In the accompanying drawings, some structural or method features may be shown in a particular arrangement and/or order. However, it should be understood that such a specific arrangement and/or sequence may not be required. In some embodiments, these features may be arranged in a manner and/or order different from those/that shown in the descriptive accompanying drawings. In addition, inclusion of the structural or method features in a particular figure does not imply that such features are needed in all embodiments, and in some embodiments, these features may not be included or may be combined with other features.

It should be noted that in the examples and the specification of this patent, relational terms such as first and second are merely used to distinguish one entity or operation from another entity or operation, and do not necessarily require or imply any such actual relationship or order between these entities or operations. Furthermore, the term "include" or any other variant thereof is intended to cover non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the existence of additional identical elements in the process, method, article, or device that includes the element.

## Claims

1. A control method, applied to an electronic device, wherein the electronic device comprises a shape memory alloy actuator, a fastening part of the shape memory alloy actuator is connected to a carrier through N actuator lines, one end of the actuator line is connected to the carrier, the other end is connected to the fastening part, and when the actuator line contracts, the actuator line drives the carrier to move relative to the fastening part; and the method comprises:
detecting a first operation of a user, wherein the first operation is used to indicate the carrier to move in a first direction; and
when L actuator lines in the N actuator lines are disconnected, and a direction of a resultant force, acting on the carrier, of K actuator lines upon contraction in N-L non-disconnected actuator lines is the same as the first direction,
driving, by using the K actuator lines, the carrier to move in the first direction.

2. The method according to claim 1, wherein the shape memory alloy actuator is disposed in a camera of the electronic device, and a lens of the camera is disposed on the carrier.

3. The method according to claim 2, wherein the N actuator lines comprise P actuator lines whose directions of components, in a first reference direction, of forces acting on the carrier upon contraction are a positive direction of the first reference direction, and N-P actuator lines whose directions of components, in the first reference direction, of forces acting on the carrier upon contraction are a negative direction of the first reference direction, wherein the first reference direction is the same as a direction of an optical axis of the lens; and driving, by using the K actuator lines, the carrier to move in the first direction comprises:
when the following conditions are met, selecting the K actuator lines from the N-L non-disconnected actuator lines, and driving, by using the K actuator lines, the carrier to move in the first direction:
at least two actuator lines in the P actuator lines are not disconnected, and a direction of a resultant force, acting on the carrier, of the non-disconnected actuator lines upon contraction in the P actuator lines is the negative direction of the first reference direction; and
at least two actuator lines in the N-P actuator lines are not disconnected, and a direction of a resultant force, acting on the carrier, of the non-disconnected actuator lines upon contraction in the N-P actuator lines is the positive direction of the first reference direction.

4. The method according to claim 3, wherein the shape memory alloy actuator comprises a first reference surface, a second reference surface, a third reference surface, and a fourth reference surface that are parallel to the first reference direction, the first reference surface and the third reference surface are symmetrically disposed with respect to a center of the carrier and are parallel to a second reference direction, the second reference surface and the fourth reference surface are symmetrically disposed with respect to the center of the carrier and are parallel to a third reference direction, and every two of the first reference direction, the second reference direction, and the third reference direction are perpendicular to each other;
the P actuator lines comprise a first actuator line, a third actuator line, a fifth actuator line, and a seventh actuator line that are respectively disposed on the first reference surface, the second reference surface, the third reference surface, and the fourth reference surface, and the N-P actuator lines comprise a second actuator line, a fourth actuator line, a sixth actuator line, and an eighth actuator line that are respectively disposed on the first reference surface, the second reference surface, the third reference surface, and the fourth reference surface;
a force of the first actuator line acting on the carrier upon contraction comprises a component in the negative direction of the first reference direction and a component in a negative direction of the second reference direction;
a force of the second actuator line acting on the carrier upon contraction comprises a component in the positive direction of the first reference direction and a component in the negative direction of the second reference direction;
a force of the third actuator line acting on the carrier upon contraction comprises a component in the negative direction of the first reference direction and a component in a positive direction of the third reference direction;
a force of the fourth actuator line acting on the carrier upon contraction comprises a component in the positive direction of the first reference direction and a component in the positive direction of the third reference direction;
a force of the fifth actuator line acting on the carrier upon contraction comprises a component in the negative direction of the first reference direction and a component in a positive direction of the second reference direction;
a force of the sixth actuator line acting on the carrier upon contraction comprises a component in the positive direction of the first reference direction and a component in the positive direction of the second reference direction;
a force of the seventh actuator line acting on the carrier upon contraction comprises a component in the negative direction of the first reference direction and a component in a negative direction of the third reference direction; and
a force of the eighth actuator line acting on the carrier upon contraction comprises a component in the positive direction of the first reference direction and a component in the negative direction of the third reference direction.

5. The method according to claim 4, wherein selecting the K actuator lines from the N-L non-disconnected actuator lines comprises:
when at least one of the first actuator line and the fifth actuator line is disconnected, and at least one of the second actuator line and the sixth actuator line is disconnected, determining at least a part of the third actuator line, the fourth actuator line, the seventh actuator line, and the eighth actuator line as the K actuator lines;
when at least one of the first actuator line and the fifth actuator line is disconnected, and at least one of the fourth actuator line and the eighth actuator line is disconnected, determining at least a part of the second actuator line, the third actuator line, the sixth actuator line, and the seventh actuator line as the K actuator lines;
when at least one of the third actuator line and the seventh actuator line is disconnected, and at least one of the second actuator line and the sixth actuator line is disconnected, determining at least a part of the first actuator line, the fourth actuator line, the fifth actuator line, and the eighth actuator line as the K actuator lines; or
when at least one of the third actuator line and the seventh actuator line is disconnected, and at least one of the fourth actuator line and the eighth actuator line is disconnected, determining at least a part of the first actuator line, the second actuator line, the fifth actuator line, and the sixth actuator line as the K actuator lines.

6. The method according to claim 5, wherein when at least one of the first actuator line and the fifth actuator line is disconnected, and at least one of the second actuator line and the sixth actuator line is disconnected, determining at least the part of the third actuator line, the fourth actuator line, the seventh actuator line, and the eighth actuator line as the K actuator lines comprises:
corresponding to a case in which the first direction is the positive direction of the first reference direction, determining the fourth actuator line and the eighth actuator line as the K actuator lines;
corresponding to a case in which the first direction is the negative direction of the first reference direction, determining the third actuator line and the seventh actuator line as the K actuator lines;
corresponding to a case in which the first direction is the positive direction of the third reference direction, determining the third actuator line and the fourth actuator line as the K actuator lines;
corresponding to a case in which the first direction is the negative direction of the third reference direction, determining the seventh actuator line and the eighth actuator line as the K actuator lines;
corresponding to a case in which the first direction is the positive direction of the second reference direction and the sixth actuator line is not disconnected, determining the third actuator line, the sixth actuator line, and the seventh actuator line as the K actuator lines; or
corresponding to a case in which the first direction is the negative direction of the second reference direction and the second actuator line is not disconnected, determining the second actuator line, the third actuator line, and the seventh actuator line as the K actuator lines.

7. The method according to claim 5, wherein when at least one of the first actuator line and the fifth actuator line is disconnected, and at least one of the fourth actuator line and the eighth actuator line is disconnected, determining at least the part of the second actuator line, the third actuator line, the sixth actuator line, and the seventh actuator line as the K actuator lines comprises:
corresponding to a case in which the first direction is the positive direction of the first reference direction, determining the second actuator line and the sixth actuator line as the K actuator lines;
corresponding to a case in which the first direction is the negative direction of the first reference direction, determining the third actuator line and the seventh actuator line as the K actuator lines;
corresponding to a case in which the first direction is the positive direction of the third reference direction, determining the second actuator line, the third actuator line, and the sixth actuator line as the K actuator lines;
corresponding to a case in which the first direction is the negative direction of the third reference direction, determining the second actuator line, the sixth actuator line, and the seventh actuator line as the K actuator lines;
corresponding to a case in which the first direction is the positive direction of the second reference direction, determining the third actuator line, the sixth actuator line, and the seventh actuator line as the K actuator lines; or
corresponding to a case in which the first direction is the negative direction of the second reference direction, determining the second actuator line, the third actuator line, and the seventh actuator line as the K actuator lines.

8. The method according to claim 2, wherein the first operation comprises any one of the following operations:
an operation of starting the electronic device by a user;
an operation of adjusting a focal length of the camera by the user;
an operation of moving the electronic device by the user; and
an operation of starting the camera by the user.

9. The method according to claim 8, wherein detecting the first operation of the user comprises:
when the first operation is the operation of starting the electronic device by the user, determining the first direction based on a current position of the carrier and a preset position of the carrier;
when the first operation is the operation of adjusting the focal length of the camera by the user, determining the first direction based on a current focal length of the camera and a focal length set by the user;
when the first operation is the operation of moving the electronic device by the user, determining the first direction based on a second direction in which the user moves the electronic device; and
when the first operation is the operation of starting the camera by the user, determining the first direction based on a focal length used by the camera to capture an image.

10. The method according to claim 1, wherein K is less than or equal to 4.

11. The method according to claim 1, wherein the method further comprises:
when none of the N actuator lines is disconnected, driving, by using M actuator lines in the N actuator lines, the carrier to move in the first direction, wherein the M actuator lines comprise at least one of the L actuator lines.

12. A readable storage medium, wherein the readable storage medium comprises instructions, and when the instructions are executed by an electronic device, the electronic device is enabled to implement the control method according to any one of claims 1 to 11.

13. An electronic device, comprising:
a shape memory alloy actuator;
a memory, configured to store instructions; and
a processor, configured to execute the instructions, to enable the electronic device to control the shape memory alloy actuator by using the control method according to any one of claims 1 to 11.
